# EUROPEAN PATENT APPLICATION

(11) **EP 4 651 031 A1**
(43) Date of publication of application: **19.11.2025**
(21) Application number: 25175197.0
(22) Date of filing: 08.05.2025
(51) Int. Cl.: G06N 3/0455, G06N 3/098

(54) **ACCELERATED ATTENTION MECHANISM WITH PARALLEL OPERATIONS**

(30) Priority: 15.05.2024 US 202418665495
(71) Applicant: Microsoft Technology Licensing, LLC, Redmond, WA 98052 (US)
(72) Inventor: YAN, Yu, Redmond, Washington, 98052 (US); HARRIS, Timothy Lawrence, Redmond, Washington, 98052 (US)
(74) Representative: CMS Cameron McKenna Nabarro Olswang LLP

(57) **Abstract**

An accelerated attention mechanism with parallel operations can improve machine learning technology by enabling execution of certain matrix multiplication operations in parallel with element-wise operations, leading to an increase in speed without quality loss. To compute attention values in a machine learning model, the mechanism can receive a query vector, key vector, and value vector and split each of these vectors into blocks. For a given query block, the mechanism can determine attention values by performing element-wise operations to update the attention values for the given query block based at least in part on previously computed attention scores for the given query block and a given key block. Concurrent with performance of at least some of the element-wise operations, the mechanism can perform a matrix multiplication operation using given query block and a next key block to determine attention scores for the given query block and next key block.

## Description

### BACKGROUND

Attention is an important part of many machine learning model implementations, particularly large language models (LLMs). An attention mechanism is a component of the machine learning model that allows the model to assign different levels of influence (e.g., weights) to different pieces of input data depending on the context for individual pieces of data in an input sequence. This is particularly useful in tasks that involve sequential data, such as natural language processing (NLP), where the importance of different parts of the input can vary.

The attention mechanism has become increasingly important as workloads continue to process longer input sequences and generate longer outputs. However, attention mechanisms can be resource-intensive, requiring significant computational power and memory, especially for these large input sequences.

### SUMMARY

An accelerated attention mechanism with parallel operations is provided. The described accelerated attention mechanism improves artificial intelligence technology by enabling execution of matrix multiplication operations in parallel with element-wise operations for the attention mechanism. The parallel execution of the matrix multiplication and element-wise operations can increase the speed of the attention mechanism without any quality loss.

The accelerated attention mechanism can compute attention values in a machine learning model by receiving a query vector, a key vector, and a value vector. To determine the attention values for the query vector, the key vector, and the value vector, the accelerated attention mechanism can split the query vector into query blocks, the key vector into key blocks, and the value vector into value blocks. For a given query block, among the query blocks, the accelerated attention mechanism can determine attention values for the given query block. Determining attention values for the given query block can include (a) performing element-wise operations to update the attention values for the given query block based at least in part on attention scores for the given query block and a given key block, among the key blocks; and (b) performing a matrix multiplication operation using the given query block and a next key block, among the key blocks, to determine attention scores for the given query block and the next key block, where the matrix multiplication operation is performed concurrently with at least some of the element-wise operations to update the attention values for the given query block.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The foregoing and other objects, features, and advantages of the invention will become more apparent from the following detailed description, which proceeds with reference to the accompanying figures.

### BRIEF DESCRIPTION OF THE DRAWINGS

**Figure 1A** illustrates an example pseudocode listing for high-level operations to determine attention values.
**Figure 1B** illustrates an example graphical representation of a structure of input tensors, intermediate tensors, and output according to the pseudocode listing illustrated in Figure 1A.

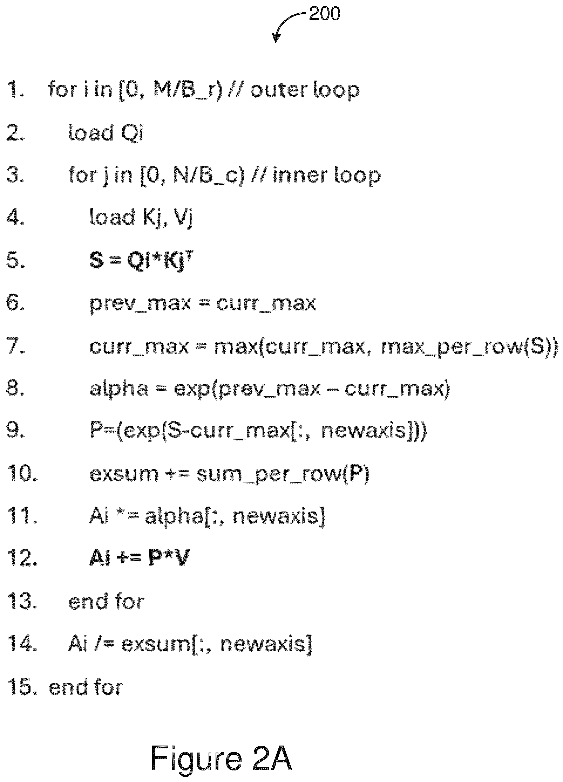

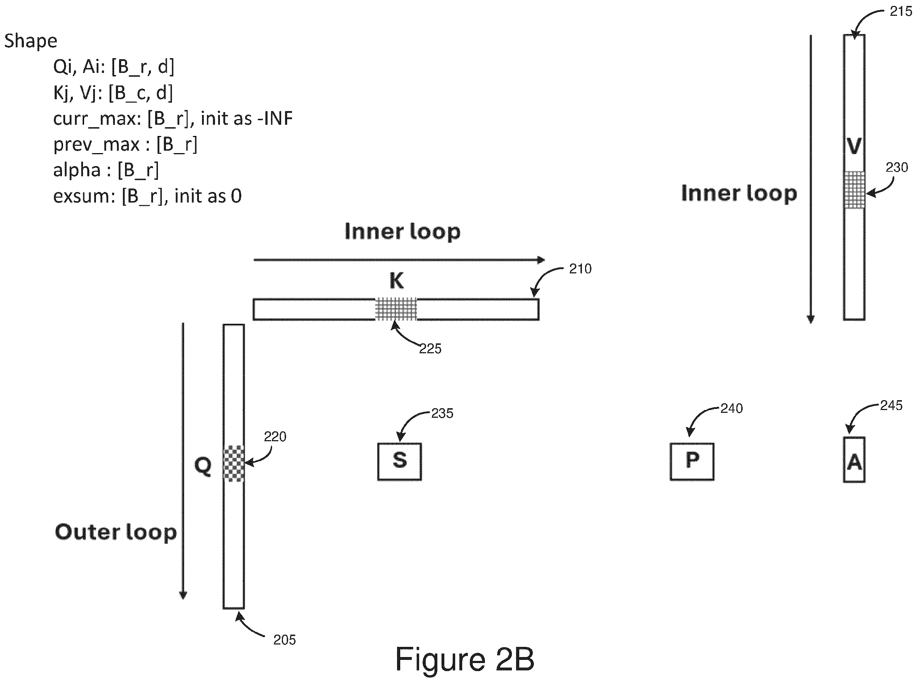

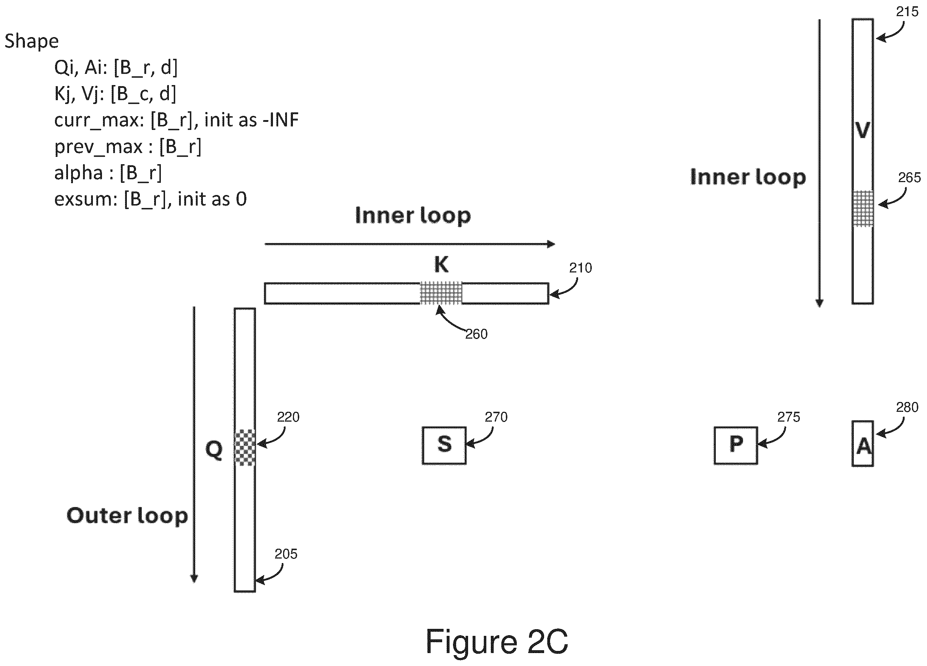

**Figures 2A-2C** illustrate an example pseudocode listing for determining attention values in a conventional attention implementation and corresponding graphical representations of the pseudocode listing, where **Figure 2A** illustrates an example pseudocode listing for determining attention values in the conventional attention implementation; **Figure 2B** illustrates an example graphical representation of blocks processed in inner and outer loops of the pseudocode listing illustrated in Figure 2A for a given iteration of the inner loop; and **Figure 2C** illustrates an example graphical representation of blocks processed in inner and outer loops of the pseudocode listing illustrated in Figure 2A for a subsequent iteration of the inner loop.
**Figure 3A** illustrates an example pseudocode listing for determining attention values of a first query block and a first key block and attention scores of the first query block and a second key block in an implementation of an accelerated attention mechanism.
**Figure 3B** illustrates an example graphical representation of blocks processed in inner and outer loops of the pseudocode listing illustrated in Figure 3A.
**Figure 4** illustrates an example flowchart of the inner and outer loops of the pseudocode listing illustrated in Figure 3A.
**Figure 5** illustrates a graphical representation comparing the conventional attention mechanism illustrated in Figures 2A-2C and the accelerated attention mechanism illustrated in Figures 3A and 3B.
**Figure 6** illustrates an example process flow diagram implementing an accelerated attention mechanism with parallel operations according to certain embodiments.
**Figure 7** illustrates a diagram of an example computing system in which some described embodiments can be implemented.
**Figure 8** illustrates an example cloud-support environment that can be used in conjunction with the technologies described herein.

### DETAILED DESCRIPTION

An accelerated attention mechanism with parallel operations ("accelerated attention mechanism") is provided. The described accelerated attention mechanism improves artificial intelligence technology by enabling the execution of matrix multiplication operations in parallel with element-wise operations. The parallel execution of the matrix multiplication and element-wise operations increases the speed of the attention mechanism without any quality loss.

An attention mechanism is a component of a machine learning model that allows the machine learning model to assign different levels of influence (e.g., weights) to different pieces of input data depending on the context for individual pieces of data in an input sequence.

Machine learning is the process of using mathematical models of data to help a computer learn without direct instruction. Machine learning is considered a subset of artificial intelligence (AI). Machine learning uses algorithms to identify patterns within data, and those patterns are then used to create a data model that can make predictions or classifications. With increased data and experience (assimilated through training), the results of machine learning are generally more accurate.

In machine learning, neural networks are used for learning and modeling complex inputs and outputs, inferring unseen relationships, and making predictions or classifications without data distribution restrictions. There are many different types of neural networks, including feedforward neural networks, recurrent neural networks (RNNs), convolutional neural networks (CNNs).

A neural network consisting of more than three layers (including input and output) is considered deep learning, or a deep neural network. Deep learning works by relying on neural network architectures in multiple layers, often implemented using high-performance graphics processing units (GPUs) deployed in the cloud or on clusters, and trained using large volumes of data (labeled data, for supervised learning) to achieve very high levels of accuracy.

Another example of a neural network is a transformer. Transformers are designed to handle sequential input data. However, transformers are not restricted to processing that data in sequential order. Instead, transformers use the attention mechanism to allow models to assign different levels of influence to different pieces of input data depending on the context for individual pieces of data in an input sequence. Processing data in non-sequential order can allow for an increased level of parallelization, which can reduce model training times. Transformers are often used for natural language processing (NLP) and are the basis for large language models (LLMs).

LLMs are built on the transformer neural network and use deep learning to produce or comprehend language using massive amounts of data. Examples of LLMs include, but are not limited to, Bidirectional Encoder Representations from Transformers (BERT) developed by Google, Generative Pretrained Transformers (GPT), including GPT-2, GPT-3, GPT-4 and ChatGPT, developed by OpenAI, Claude developed by Anthropic PBC, Text-to-Text Transformers (T5) developed by Google.

In the context of LLMs, attention mechanisms allow the model to weigh the significance of different parts of input independent of their position in the input sequence. As an example, in many model implementations, the input data may be very large and complex, and it can be difficult for the model to process all of it. Attention mechanisms allow the model to selectively focus on the parts of the input that are most important for generating the output, and to ignore the less relevant parts. This can help the model to increase accuracy and to run more efficiently.

There are many different types of applications of the attention mechanism. Some of the main applications include, but are not limited to, natural language processing (NLP) tasks (e.g., machine translation, text summarization, sentiment analysis, named entity recognition, and chatbots), computer vision tasks (e.g., image classification, image captioning, and object detection), speech recognition tasks (e.g., recognizing spoken commands, speaker identification, and transcribing audio recordings), and music generation tasks (e.g., generating melodies or chord progressions).

As an example, attention mechanisms can help improve the quality of machine translation by allowing the model to focus on the relevant parts of the source sentence when generating each word in the target sentence. As another example, in speech recognition, attention mechanisms can help the model focus on the relevant parts of the audio input when transcribing it into text, as well as help focus on characteristics of speech that are unique to individuals, aiding in more accurate speaker identification. As yet another example, in image captioning, attention mechanisms can help the model focus on the relevant parts of the image when generating a caption. In particular, the attention mechanism can help focus on different regions of the image, resulting in more accurate and contextually relevant descriptions.

In general, attention mechanisms use three main inputs, a query vector (Q), a key vector (K), and a value vector (V). The query vector (Q) represents the current element or context the model is focusing on. The key vector (K) contains information about the elements being compared to the query. The value vector (V) contains the actual information associated with each key. Thus, each key (in the key vector K) has a corresponding value (in the value vector V). Each element in an input sequence is encoded (using positional encoding according to any known approach) and represented as the query in the query vector (Q). The output of the encoded token is a key with an associated value.

In a general implementation of the attention mechanism, the query vector (Q), the key vector (K), and the value vector (V) are used to calculate attention scores, generate attention weights, and determine attention values (or weighted sum).

The query vector (Q) is matched against the key vector (K) to obtain the attention scores. Thus, the attention scores are determined by measuring the similarity between the query vector (Q) and the key vector (K). The attention scores are passed through a softmax function to obtain attention weights that sum up to one. These attention weights indicate the importance or relevance of each key-value pair. The attention weights (as attention value updates) are then applied to the corresponding values, generating the attention value. This attention value represents the context or focused information relevant to the query. That is, the attention value is the aggregate of the relevant information from the input based on their importance determined by the attention mechanism.

Typically, the attention mechanism runs on a GPU or an AI accelerator, which may be implemented using special-purpose hardware such as a neural processing unit (NPU). GPUs and AI accelerators are specialized processors designed for parallel processing. An AI accelerator is specifically optimized for the efficient processing of AI workloads, such as neural networks. GPUs often include AI-specific hardware, and are commonly used as AI accelerators, both for model training and inference.

AI accelerators and GPUs typically include dedicated units for matrix multiplication operations. The dedicated units for matrix multiplication can accelerate the process of matrix multiplication by enabling mixed-precision computing and dynamically adapting calculations to accelerate throughput while preserving accuracy. Examples of these dedicated units for matrix multiplication include, for example, Tensor Cores developed by Nvidia Corporation and used in Nvidia GPUs, and Tensor Processing Units (TPU) developed by Google. AI accelerators and GPUs also include other processing units, which can be used to perform general processing (such as element-wise operations) while matrix multiple operations are performed with other, dedicated hardware.

Examples of attention mechanisms include, but are not limited to, self-attention mechanisms and multi-head attention mechanisms. Both the self-attention mechanism and multi-head attention mechanism were first presented in a paper entitled "Attention is All You Need" by Vaswani et al. (Vaswani, Ashish, et al. "Attention is all you need." Advances in neural information processing systems 30 (2017)).

Self-attention is a variant of the original attention mechanism where the input elements are attended to within the same sequence, enabling the model to capture dependencies within the input itself. Multi-head attention can be used to enhance the expressive power and capture different types of relationships in the input sequence. Multi-head attention achieves this by performing multiple sets of self-attention computations in parallel, where each set of self-attention computations is considered an attention head.

By performing multi-head attention, the attention mechanism can capture different types of relationships and dependencies between different inputs. Each attention head can focus on different aspects or patterns within the input sequence, allowing for more expressive and comprehensive representations.

FlashAttention-2 is another implementation of attention mechanism. FlashAttention-2 is an improvement of the FlashAttention attention mechanism. The FlashAttention-2 implementation was introduced in the paper "Flashattention-2: Faster attention with better parallelism and work partitioning" by Tri Dao (Dao, Tri. "Flashattention-2: Faster attention with better parallelism and work partitioning." arXiv preprint arXiv:2307.08691 (2023)). While mathematically equivalent, the FlashAttention-2 attention mechanism provides an improvement in speed as compared to the FlashAttention attention mechanism. The FlashAttention-2 attention mechanism provides a more efficient way to calculate attention than the self-attention mechanism described above.

The FlashAttention-2 attention mechanism reduces memory reads and writes of the self-attention mechanism while maintaining the same output of the self-attention mechanism without approximation. In some examples, the FlashAttention-2 attention mechanism reduces the number of reads and writes to global memory by replacing some of these with faster accesses to shared memory. In these examples, global memory is larger and cheaper but also slower than shared memory. It should be understood that the exact names used for different kinds of memory may differ between devices.

To reduce memory reads and writes, the FlashAttention-2 implementation performs matrix multiplications in blocks, such that each block fits within the cache of a GPU and can minimize data copying between GPU caches (as data movement is slow). For example, the FlashAttention-2 implementation provides an improvement to avoid storing intermediate results, which would otherwise include the entire probability matrix (P) and the entire attention score matrix (S), in global memory. For the FlashAttention-2 implementation, in contrast, the intermediate results for smaller blocks are stored in static random-access memory (SRAM) instead of high bandwidth memory (HBM). Since the FlashAttention-2 implementation is more memory efficient, the attention mechanism can work with much larger input sequence lengths without running into out-of-memory issues.

Problems arise within AI technology with the growing size and complexity of machine learning models. For example, LLMs can ingest very large (e.g., billions of parameters) and complex data. Deploying these LLMs demands substantial computational resources.

Attention mechanisms allow a machine learning model to weigh the significance of different parts of input. As an example, in many model implementations, the input data may be very large and complex, and it can be difficult for the model to process all of it. Attention mechanisms allow the model to selectively focus on the parts of the input that are most important for generating the output, and to ignore the less relevant parts. This can help the model to increase accuracy and to run more efficiently.

However, attention mechanisms can be resource-intensive, requiring significant computational power and memory, especially for large input sequences, as they require computing a weight for every pair of input elements. Standard attention mechanisms suffer quadratic complexity in terms of the sequence length (number of tokens).

As machine learning models work on larger and more complex input contexts and generate larger outputs, there is also an increase in the time spent in the attention mechanism as compared to other parts of the model implementation. In attention mechanisms, there is dependency between matrix multiplication operations and element-wise operations that use the results of the matrix multiplication operations, which limits these operations to be run sequentially. This dependency can lead to more time spent in the attention mechanism than other parts of the model implementation.

Indeed, since matrix multiplication operations and element-wise operations (that use the results of the matrix multiplication operations) run sequentially, there is no overlap within the different parts of the GPU. In particular, there is no overlap with work executed inside and work executed outside the GPU's dedicated units for matrix multiplication. The lack of overlap between matrix multiplication operations and other operations leads to inefficient use of the overall GPU. However, as models work on longer input contexts and generate longer outputs, the ability to overlap these operations within the different parts of the GPU is becoming more important.

There are many different types of applications of the attention mechanism. Some of the main applications include, but are not limited to, natural language processing (NLP) tasks (e.g., machine translation, text summarization, sentiment analysis, named entity recognition, and chatbots), computer vision tasks (e.g., image classification, image captioning, and object detection), speech recognition tasks (e.g., recognizing spoken commands, speaker identification, and transcribing audio recordings), music generation tasks (e.g., generating melodies or chord progressions), and healthcare and medical information processing tasks.

In natural language processing, attention mechanisms can enable models to focus on relevant words or phrases, enhancing tasks like machine translation and sentiment analysis. Within computer vision, attention mechanisms can facilitate targeted feature extraction, improving tasks such as object detection and image captioning by directing focus to salient regions. This improvement can hold notable significance, particularly for applications like autonomous vehicles, where precise object detection is paramount for safe navigation, and facial recognition systems, where attention mechanisms can enhance accuracy by focusing on key facial features. In healthcare, attention mechanisms can aid in personalized treatment recommendations by prioritizing relevant patient data, enhancing diagnostic accuracy and treatment outcomes. Moreover, in finance, attention mechanisms can facilitate anomaly detection in market trends, empowering decision-makers to identify critical patterns amidst vast datasets. Additionally, in music generation tasks, attention mechanisms can assist in composing harmonious melodies by emphasizing key notes or rhythms, fostering creativity and coherence. Across these domains and beyond, attention mechanisms can serve as invaluable assets, enhancing the efficiency and effectiveness of a myriad of applications.

The described accelerated attention mechanism improves AI technology by enabling the execution of certain matrix multiplication operations in parallel with element-wise operations. Advantageously, the parallel execution of the matrix multiplication and element-wise operations increases the speed of the attention mechanism without any quality loss.

Approaches described herein provide technical solutions to technical problems in the deployment of machine learning models, particularly LLMs, which ingest very large (e.g., billions of parameters) and complex data. The technical solutions use an accelerated attention mechanism with parallel operations. The parallel operations enable the execution of certain matrix multiplication operations in parallel with element-wise operations within the attention mechanism.

Thus, the approaches described herein provide several technical advantages.

For example, unlike in conventional attention mechanisms, with the accelerated attention mechanism, due to pipelining of operations, certain matrix multiplication operations (e.g., for a given query block and next key block) can be performed in parallel with certain element-wise operation (e.g., for the given query block and a given key block), despite the dependency between matrix multiplication operations and element-wise operations. (The matrix multiplication operation for the given query block and given key block is performed in a prior iteration of an inner loop or before the first iteration of the inner loop for the given query block.)

Advantageously, the pipelining of certain operations in the accelerated attention mechanism works despite the dependency between the matrix multiplication operations and the element-wise operations (that use the results of the matrix multiplication operations), enabling the parallel execution of certain matrix multiplication operations and element-wise operations. The parallel execution of the operations creates overlap with work executed inside and work executed outside the GPU's dedicated units for matrix multiplication, leading to a more efficient use of the overall GPU. The parallel execution of the matrix multiplication and element-wise operations can reduce the time and memory complexity of attention mechanism without any quality loss.

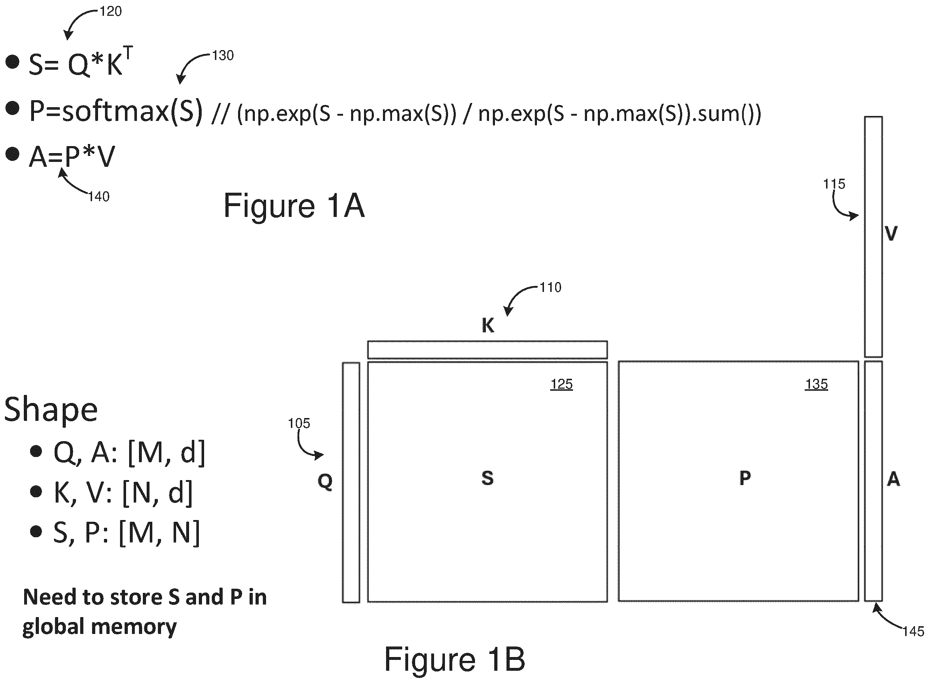

**Figure 1A** illustrates an example pseudocode listing for high-level operations to determine attention values. **Figure 1B** illustrates an example graphical representation of a structure of input tensors, intermediate tensors, and output according to the pseudocode listing illustrated in Figure 1A. Referring to Figure 1A and Figure 1B, the described high-level operations to determine attention values can be performed in an implementation of a self-attention mechanism.

The example pseudocode listing for the high-level operations illustrated in Figure 1A includes three operations, including operation **120** for determining attention scores, operation **130** for determining probabilities, and operation **140** for determining attention values.

The graphical representation illustrated in Figure 1B shows the structure of the input tensors (e.g., a query vector (Q) **105,** a key vector (K) **110,** and a value vector (V) **115**) for the self-attention mechanism. Here, the query vector (Q) **105** has a shape of a first sequence length (M) by a dimension (d), the key vector (K) **110** has a shape of a second sequence length (N) by the dimension (d), and the value vector (V) **115** has a shape of the second sequence length (N) by the dimension (d).

In the self-attention implementation, attention scores are calculated by taking the dot product (which is a way of measuring how similar two vectors are) of the query vector for the current token and the key vectors for all the tokens in the input sequence, as shown in operation **120** of Figure 1A. Operation **120** states S= Q*K^{T}, where S is an attention score matrix, Q is the query vector, and K^{T} is the transpose of the key vector. The graphical representation illustrated in Figure 1B shows the structure of the intermediate tensor, attention score matrix (S) **125,** which stores the attention scores determined in operation **120** and has a shape of the first sequence length (M) by the second sequence length (N).

An attention score indicates how much weight each value, and corresponding token, obtains in the self-attention. For example, for natural language processing, a high attention score for a pair of two tokens indicates that they are syntactically or semantically related. Thus, a high attention score can signal important tokens that the model should "pay attention" to.

The attention scores are passed through a softmax function to obtain a probability distribution, as shown in operation **130** of Figure 1A. Operation **130** states P=softmax(S), where P is a probability matrix and S is the attention score matrix determined in operation **120.** The softmax function, also known as softargmax or normalized exponential function, is a generalization of the logistic function that compresses values into a given range. Operation **130** transforms the attention scores into probabilities, where these probabilities sum up to 1. In operation **130,** the softmax function is computed by the following function: (np.exp(S - np.max(S)) / np.exp(S - np.max(S)).sum()). The graphical representation illustrated in Figure 1B shows the structure of another intermediate tensor, the probability matrix (P) **135,** which stores the probabilities determined in operation **130** and has a shape of the first sequence length (M) by the second sequence length (N).

Attention values for each query are then calculated as the weighted sum of the value vectors (V), using the probabilities determined in operation **130** as weights, as shown in operation **140** of Figure 1A. Operation **140** states A = P*V, where A is an attention value vector, P is the probability matrix, and V is the value vector **115.** The graphical representation illustrated in Figure 1B shows the structure of the output, attention matrix (A) **145,** which stores the attention values determined in operation **140** and has a shape of the second sequence length (N) by the dimension (d).

During the example self-attention implementation illustrated in Figures 1A and 1B, it is necessary to determine, as intermediate results (e.g., intermediate tensors), the entire probability matrix (P) and the entire attention score matrix (S)). For large (but realistic) values of M and N, the probability matrix (P) and the attention score matrix (S) can be very large - potentially too large to store in fast memory for a GPU and thus requiring expensive memory transfer operations to/from global memory. Alternatively, smaller values can be set for M and N in order for the probability matrix (P) and the attention score matrix (S) to fit in fast memory, but that can limit the usefulness of the attention mechanism. Thus, for the self-attention mechanism shown in Figures 1A and 1B, storing the intermediate results in fast memory for the GPU is infeasible, and the intermediate results are instead stored in global memory, which imposes significant challenges of data processing speed and scalability on conventional computer systems.

In practice, input tensors (e.g., a query vector (Q) **105,** a key vector (K) **110,** and a value vector (V) **115**) can be provided for multiple heads (e.g., 4 heads, 8 heads, 16 heads). In practice, input tensors (e.g., a query vector (Q) **105,** a key vector (K) **110,** and a value vector (V) **115**) can have different size for the count of heads (e.g., different numbers of heads for the query vector (Q) compared to the key vector (K) and value vector (V)). With group-query-attention, portions of smaller input tensors for a key vector (K) **110,** and a value vector (V) **115** can be split into blocks and reused multiple times with a larger input tensor for query vector (Q) **105.** For example, the query vector (Q) **105** may be 4 times larger than the key vector (K) **110** and value vector (V) **115,** such that each block of the key vector (K) **110** and value vector (V) **115** is reused four times when processing the query vector (Q) **105** one time.

**Figures 2A-2C** illustrate an example pseudocode listing for determining attention values in a conventional attention implementation and corresponding graphical representations of processing of blocks according to the pseudocode listing. **Figure 2A** illustrates an example pseudocode listing for computing attention values in the conventional attention implementation. **Figure 2B** illustrates an example graphical representation of blocks processed in inner and outer loops of the pseudocode listing illustrated in Figure 2A for a given iteration of the inner loop. **Figure 2C** illustrates an example graphical representation of blocks processed in inner and outer loops of the pseudocode listing illustrated in Figure 2A for a subsequent iteration of the inner loop.

The conventional attention implementation described in Figures 2A-2C is a FlashAttention-2 implementation. Referring to Figures 2A-2C, the pseudocode listing in Figure 2A shows operations performed to determine attention values. Whereas Figure 2B depicts the operations performed to determine the attention values of a given query block and a given key block, Figure 2C depicts the operations performed to determine the attention values of the given query block and a next key block. Thus, both the graphical representation of Figure 2B and the graphical representation of Figure 2C include a given query block (Qᵢ) **220.**

Additionally, both the graphical representation of Figure 2B and the graphical representation of Figure 2C include a same query vector **205,** a same key vector **210,** and a same value vector **215.** The query vector (Q) **205** has a shape of a first sequence length (M) by head dimension (d), the key vector (K) **210** has a shape of a second sequence length (N) by the head dimension (d), and the value vector (V) **215** has a shape of the second sequence length (N) by the head dimension (d).

Through tiling, the FlashAttention-2 attention mechanism splits the inputs (the query vector (Q) **205,** the key vector (K) **210,** and the value vector (V) **215**) into blocks. Here, the query vector (Q) **205** is split into query blocks Q₀, ..., Q_{T_r-1} of size [B_r, d] each, where B_r is a row block size and d is the head dimension. The key vector (K) **210** is split into key blocks K₀, ..., K_{T_c-1} of size [B_c, d] each, where B_c is a column block size and d is the head dimension. The value vector (V) **215** is split into value blocks V₀, ..., V_{T_c-1} of size [B_c, d] each, where B_c is a column block size and d is the head dimension.

Lines 1, 2, and 13-15 of pseudocode listing **200** include operations for an outer loop, and lines 3-13 of pseudocode listing **200** include operations for an inner loop. In the outer loop, the FlashAttention-2 attention mechanism loops over blocks of the query vector (Q) **205** and loads them from HBM to fast on-chip SRAM. For each query block, the FlashAttention-2 attention mechanism loops on blocks of the key vector (K) **210** and the value vector (V) **215** in the inner loop, loading the blocks of the key vector (K) **210** and the value vector (V) **215** from HBM to SRAM, and writing the output of the attention computation back to HBM.

As previously described, attention mechanism implementations (e.g., the FlashAttention-2 mechanism) have two types of operations, including matrix multiplication operations and element-wise operations. In the FlashAttention-2 attention mechanism, lines 5 and 12 of pseudocode listing **200** include matrix multiplication operations and are executed in dedicated units for matrix multiplication (e.g., Tensor Cores developed by Nvidia Corporation and used in Nvidia GPUs). Lines 6-11 (and the addition part of line 12) of pseudocode listing **200** include some element-wise operations and are executed outside the dedicated units for matrix multiplication.

As will be described in more detail below, there is dependency between these two types of operations (for a given query block and given key block), which limits these operations to be run sequentially for a given iteration of the inner loop. For example, a first matrix multiplication operation is performed for a given query block and given key block, then element-wise operations are performed using results of the first matrix multiplication operation (for the given query block and given key block), and then a second matrix multiplication operation is performed for the given query block and given key block. Since the operations run sequentially, there is no overlap within the different parts of the GPU. In particular, there is no overlap with work executed inside the dedicated units for matrix multiplication and work executed outside the dedicated units for matrix multiplication. The lack of overlap between the operations leads to inefficient use of the overall GPU. As models work on longer input contexts and generate longer outputs, the inability to overlap these operations within the different parts of the GPU is becoming more problematic.

Referring to Figure 2A and Figure 2B, attention values can be determined for the given query block (Qᵢ) **220** of the query vector (Q) **205.** In the outer loop, the given query block (Qᵢ) **220** is loaded to the SRAM, as shown in line 2 of pseudocode listing **200.**

While processing the given query block (Qᵢ) **220,** the attention mechanism loops on blocks of the key vector (K) **210** and the value vector (V) **215,** loading the blocks from HBM to SRAM, and writing the output of the attention computation back to HBM.

In the illustrative example of Figure 2A, in a given iteration of the inner loop, a given key block (Kⱼ) **225** of the key vector (K) **210** and a given value block (Vⱼ) **230** of the value vector (V) **215** are loaded to SRAM, as shown in line 4 of pseudocode listing **200.**

Attention scores are determined for the given query block (Qᵢ) **220** and the given key block (Kⱼ) **225** using the first matrix multiplication operation of the iteration of the inner loop, as shown in line 5 of the pseudocode listing **200.** In line 5, the attention scores are determined using matrix multiplication operation Q*K^{T}, where Q is the given query block (Qᵢ) **220** and K^{T} is the transpose of the given key block (Kⱼ) 225. The attention scores are stored in an attention score matrix (S) **235** of size [B_r, B_c].

Since the attention scores stored in the attention score matrix (S) **235** are used as the input for the next portion of the implementation, the FlashAttention-2 attention mechanism needs to wait until the attention score matrix (S) **235** is computed before moving to the operations of lines 6-11 of the pseudocode listing **200.**

The operations of lines 6-11 of the pseudocode listing **200** are used to find maximum values for each row of the given query block (Qᵢ) **220** and determine scaling values and probabilities. In particular, for each row of the given query block (Qᵢ) **220,** the operation (prev_max=curr_max) in line 6 of the pseudocode listing **200** sets a previous maximum value of the row to a current maximum value of the row; and the operation (curr_max = max(curr_max, max_per_row(S))) in line 7 of the pseudocode listing **200** sets the current maximum value of the row to the greater value between (a) the current maximum value of the row and (b) a maximum value of a corresponding row of the attention scores for given query block (Qᵢ) **220** and the given key block (Kⱼ) **225.**

The operation (alpha = exp(prev_max - curr_max)) in line 8 of pseudocode listing 200 determines scaling values based on differences between previous maximum values and current maximum values for the respective rows of the given query block (Qi) **220.** The operation in line 8 uses the outputs of the operations performed in lines 6 and 7 of the pseudocode listing **200.**

The probability values for the given query block (Qᵢ) **220** and the given key block (Kⱼ) **225** are determined by implementing a softmax function. For example, the operation (P = (exp(S-curr_max[:, newaxis]))) in line 9 of pseudocode listing **200** determines probability values for given query block (Qᵢ) **220** and the given key block (Kⱼ) **225.** The operation in line 9 uses the outputs of the operations of lines 5 and 7 of the pseudocode listing **200** as inputs. The operation (curr_max[:, newaxis]) adjusts (e.g., interprets or casts) the dimensions of the vector curr_max, adding a dimension, to match the dimensions of the attention scores S. For example, the operation (curr_max[:, newaxis]) causes the vector curr_max to be interpreted as a matrix extended to match the dimensions of the attention scores S, such that the values from curr_max are repeated along the new dimension, without actually transforming curr_max in memory to hold the new repeated values explicitly. The probability values are stored in a probability matrix (P) **240** of size [B_r, B_c].

The operation (exsum += sum_per_row(P)) in line 10 of pseudocode listing **200** includes determining a cumulative probability value (sum_per_row(P)) for a corresponding row of the probability values for the given query block (Qᵢ) **220** and the given key block (Kⱼ) **225;** and adding the cumulative probability value (sum_per_row(P)) for the corresponding row of the probability values to a cumulative probability value (exsum) for the row of the given query block (Qᵢ) **220.**

The operation (Aᵢ *= alpha[:, newaxis]) in line 11 of pseudocode listing **200** updates the attention values for the given query block (Qᵢ) **220** based on the scaling values (alpha). Here, the dimensionality of the scaling values is adjusted (e.g., interpreted or cast, such that the values from alpha are repeated along the new dimension, without actually transforming alpha in memory to hold the new repeated values explicitly) to match the dimensionality of the attention values for the given query block (Qᵢ) **220** to create adjusted scaling values. Then, for respective elements of the attention values for the given query block (Qᵢ) **220,** one of the attention values (Aᵢ) **245** for the given query block (Qᵢ) **220** is multiplied by a corresponding one of the adjusted scaling values. The (updated) attention values for the given query block (Qᵢ) **220** are stored in an attention value matrix (Aᵢ) **245.**

In the operations of lines 6-11 of the pseudocode listing **200,** the current maximum values (curr_max), the previous maximum values (prev max), the scaling values (alpha) and the cumulative probability values (exsum) are all one-dimensional vectors of shape [B_r].

The FlashAttention-2 attention mechanism needs to wait until the probability values (stored in P **240**) for the given query block (Qᵢ) **220** and the given key block (Kⱼ) 225 are computed, and also needs to wait until the (current) attention values are scaled using the scaling values in line 11, before updating the attention values using a matrix multiplication operation in line 12. In the FlashAttention-2 attention mechanism, no matrix multiplication operations are executed while the element-wise operations are running.

Once the operations in lines 6-11 have executed, the FlashAttention-2 attention mechanism determines the attention value updates for the given query block (Qᵢ) **220** and given key block (Kⱼ) **225,** as shown in the matrix multiplication operation (P*V) in line 12 of pseudocode listing **200.** Here, the matrix multiplication operation is performed using the probability values (stored in P **240**) and the given value block (Vⱼ) **230** to determine attention value updates for the given query block (Qᵢ) **220** and the given key block (Kⱼ) **225.** Then, for respective elements of the attention values (Aᵢ) for the given query block (Qᵢ) **220,** one of the attention value updates (from the results of the matrix multiplication operation P*V) is added to a corresponding one of the attention values (Aᵢ) for the given query block (Qᵢ) **220.** The attention value updates for the given query block (Qᵢ) **220,** given key block (Kⱼ) **225,** and given value block (Vⱼ) **230** are thus incorporated into the attention value matrix (Aᵢ) **245.**

Once the FlashAttention-2 attention mechanism executes the given iteration of the inner loop for the given key block, the FlashAttention-2 attention mechanism can perform additional iterations for each of the remaining key blocks (for the given query block). That is, for each of the remaining key blocks of the key vector (K) **210,** the FlashAttention-2 attention mechanism repeats performing the element-wise operations and the matrix multiplication operations within the inner loop.

Referring to Figure 2C, the FlashAttention-2 attention mechanism repeats performing the element-wise operations and the matrix multiplication operations within the inner loop to determine (updated) attention values of the given query block and a next key block. Here, in the next iteration of the inner loop (j has been incremented), a next key block (Kⱼ) **260** of the key vector (K) **210** and a next value block (Vⱼ) **265** of the value vector (V) **215** are loaded to SRAM, as shown in line 4 of pseudocode listing **200.**

Attention scores are determined for the given query block (Qᵢ) **220** and the next key block (Kⱼ) **260** using the first matrix multiplication operation of the iteration, as shown in line 5 of the pseudocode listing **200.** In line 5, the attention scores are determined using matrix multiplication operation Q*K^{T}, where Q is the given query block (Qᵢ) **220** and K^{T} is the transpose of the next key block (Kⱼ) **260.** The attention scores are stored in the attention score matrix (S) **270** of size [B_r, B_c], potentially overwriting the attention scores that were computed using the given query block (Qᵢ) **220** and the given key block (Kⱼ) **225** in the prior iteration (if the same memory is used for S **270**).

Since the attention scores stored in the attention score matrix (S) **270** are used as the input for the next portion of the implementation, the FlashAttention-2 attention mechanism needs to wait until the attention score matrix (S) **270** is computed before moving to the operations of lines 6-11 of the pseudocode listing **200.**

The operations of lines 6-11 of the pseudocode listing **200** are again used to find (update) maximum values for each row of the given query block (Qᵢ) **220** and determine scaling values and probabilities. In particular, for each row of the given query block (Qᵢ) **220,** the operation (prev_max=curr_ max) in line 6 of the pseudocode listing **200** sets (updates) the previous maximum value of the row to a current maximum value of the row (after processing for previous iterations of the inner loop); and the operation (curr_max = max(curr_max, max_per_row(S))) in line 7 of the pseudocode listing **200** sets the current maximum value of the row to the greater value between (a) the current maximum value of the row and (b) a maximum value of a corresponding row of the attention scores for given query block (Qᵢ) **220** and the next key block (Kⱼ) **260.**

The operation (alpha = exp(prev_max - curr_max)) in line 8 of pseudocode listing **200** determines scaling values based on differences between previous maximum values and current maximum values for the respective rows of the given query block (Qi) **220.** The operation in line 8 uses the outputs of the operations performed in lines 6 and 7 of the pseudocode listing **200.**

The probability values for the given query block (Qᵢ) **220** and the next key block (Kⱼ) **260** are determined by implementing a softmax function. For example, the operation (P = (exp(S-curr_max[:, newaxis]))) in line 9 of pseudocode listing **200** determines probability values for the given query block (Qᵢ) **220** and the next key block (Kⱼ) **260.** The operation in line 9 uses the outputs of the operations of lines 5 and 7 of the pseudocode listing **200** as inputs. The probability values are stored in a probability matrix (P) **275** of size [B_r, B_c], potentially overwriting the probability values that were computed using the given query block (Qᵢ) **220** and the given key block (Kⱼ) **225** in the prior iteration (if the same memory is used for P **275**).

The operation (exsum += sum_per _row(P)) in line 10 of pseudocode listing **200** includes determining a cumulative probability value (sum_per_row(P)) for a corresponding row of the probability values for the given query block (Qᵢ) **220** and the next key block (Kⱼ) **260;** and adding the cumulative probability value (sum_per_row(P)) for the corresponding row of the probability values to a cumulative probability value (exsum) for the row of the given query block (Qᵢ) **220.**

The operation (Aᵢ *= alpha[:, newaxis]) in line 11 of pseudocode listing **200** updates the attention values for the given query block (Qᵢ) **220** based on the scaling values (alpha). Here, the dimensionality of the scaling values is adjusted (e.g., interpreted or cast, such that the values from alpha are repeated along the new dimension, without actually transforming alpha in memory to hold the new repeated values explicitly) to match the dimensionality of the attention values for the given query block (Qᵢ) **220** to create adjusted scaling values. Then, for respective elements of the attention values for the given query block (Qᵢ) **220,** one of the attention values (Aᵢ) **280** for the given query block (Qᵢ) **220** is multiplied by a corresponding one of the adjusted scaling values. The (updated) attention values for the given query block (Qᵢ) 220 are stored in an attention value matrix (Aᵢ) **280.**

It should be understood that, although the attention mechanism iterates over blocks of key vector (K) **210** and value vector (V) **215** in the inner loop, and content stored within the attention score matrix (S) (e.g., attention score matrix (S) **235** and attention score matrix (S) **270**), the probability matrix (P) (e.g., probability matrix (P) **240** and probability matrix (P) **275**), and the attention value matrix (A) (e.g., attention value matrix (Aᵢ) **240** and attention value matrix (Aᵢ) **280**) is updated, the actual memory locations for the attention score matrix (S), the probability matrix (P), and/or the attention value matrix (A), respectively, may be reused. For example, the attention value matrix (Aᵢ) **280** storing the (updated) attention values can reuse the same memory as the attention value matrix (Aᵢ) **245** of Figure 2B. Similarly, the attention score matrix (S) **270** storing the (updated) attention scores can reuse the same memory as the attention score matrix (S) **235** of Figure 2B, and the probability matrix (P) **275** storing the (updated) probability values can reuse the same memory as the probability matrix (P) **240** of Figure 2B.

The FlashAttention-2 attention mechanism needs to wait until the probability values (stored in P **275**) for the given query block (Qᵢ) **220** and next key block (Kⱼ) **260** are computed, and also needs to wait until the (current) attention values are scaled using the scaling values in line 11, before updating the attention values using a matrix multiplication operation in line 12. In the FlashAttention-2 attention mechanism, no matrix multiplication operations are executed concurrently with the element-wise operations.

Once the operations in lines 6-11 have executed, the FlashAttention-2 attention mechanism determines the attention value updates for the given query block (Qᵢ) **220** and next key block (Kⱼ) **260,** as shown in the matrix multiplication operation (P*V) in line 12 of pseudocode listing **200.** Here, the matrix multiplication operation is performed using the probability values (stored in P **275**) and the next value block (Vⱼ) **280** to determine attention value updates for the given query block (Qᵢ) **220** and next key block (Kⱼ) **260.** Then, for respective elements of the attention values (Aᵢ) for the given query block (Qᵢ) **220,** one of the attention value updates (from the results of the matrix multiplication operation P*V) is added to a corresponding one of the attention values (Aᵢ) for the given query block (Qᵢ) **220.** The attention value updates computed using the given query block (Qᵢ) **220,** next key block (Kⱼ) **260,** and next value block (Vⱼ) **280** are thus incorporated into the attention value matrix (Aᵢ) **280.**

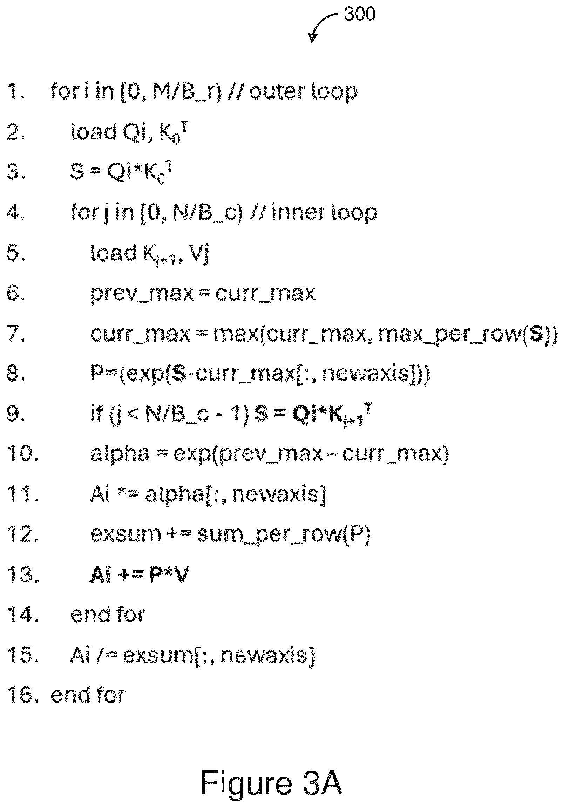

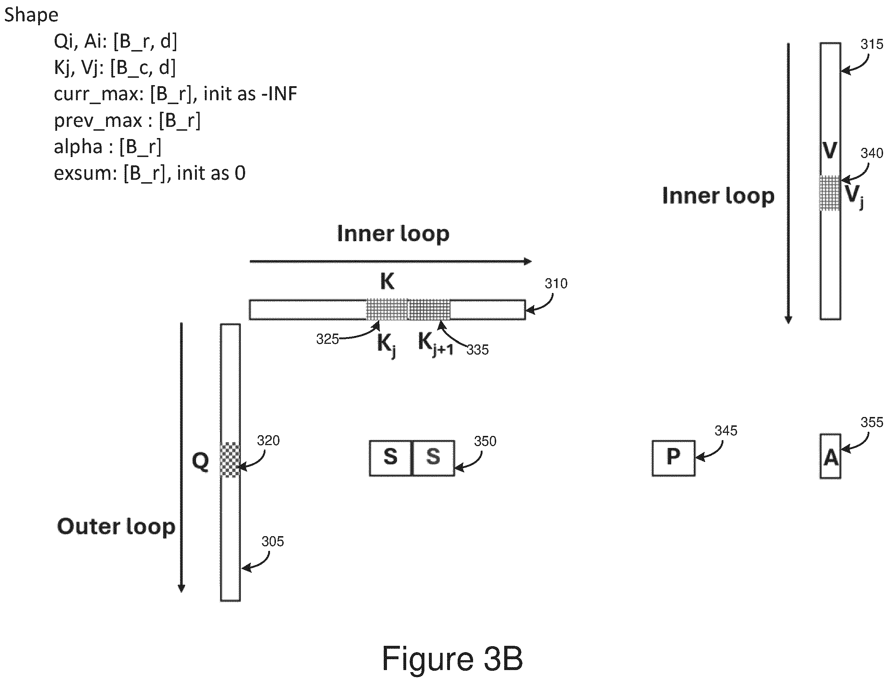

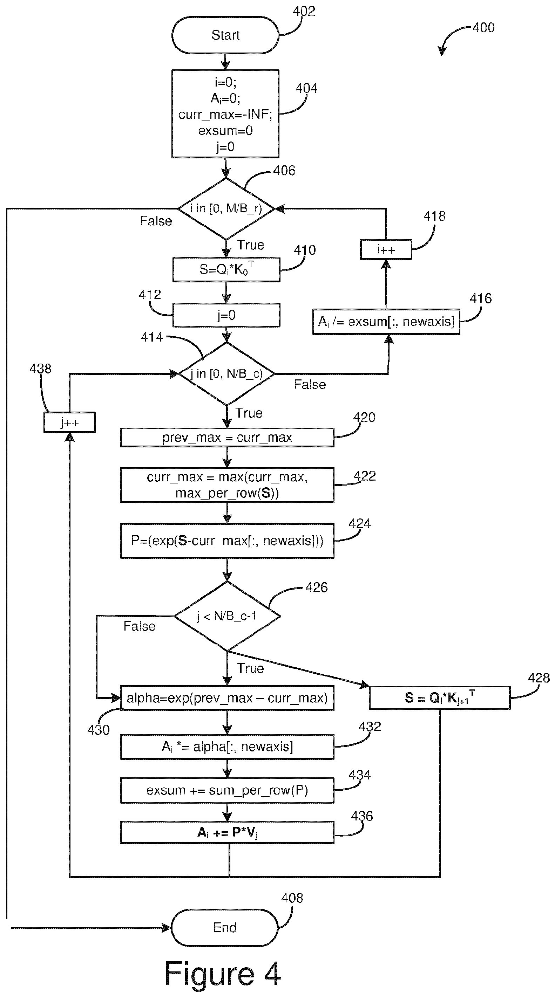

**Figure 3A** illustrates an example pseudocode listing for determining attention values in an implementation of an accelerated attention mechanism. **Figure 3B** illustrates an example graphical representation of blocks processed in inner and outer loops of the pseudocode listing illustrated in Figure 3A. **Figure 4** illustrates an example flowchart of the inner and outer loops of the pseudocode listing illustrated in Figure 3A.

Referring to Figure 3B, blocks processed according to pseudocode listing **300** are illustrated for determining attention values of a given query block (Qᵢ) **320** and a given key block (Kⱼ) **325** in parallel with determination of attention scores of the given query block (Qᵢ) **320** and a next key block (Kⱼ₊₁) **335** in an implementation of an accelerated attention mechanism. Input for the accelerated attention mechanism can include a query vector (Q) **305,** a key vector (K) **310,** and a value vector (V) **315.** The query vector (Q) **305** can be a multi-dimensional vector. For example, the query vector (Q) **305** can be a two-dimensional vector having a shape of a first sequence length (M) by head dimension (d), or the query vector (Q) **305** can be a three-dimensional vector having a shape of a count of number of heads by first sequence length (M) by head dimension (d). The key vector (K) **310** can be a multi-dimensional vector. For example, the key vector (K) **310** can be a two-dimensional vector having a shape of a second sequence length (N) by the head dimension (d), or the key vector (K) **310** can be a three-dimensional vector having a shape of the count of number of heads by second sequence length (N) by head dimension (d). The value vector (V) **315** can be a multi-dimensional vector. For example, the value vector (V) **315** can be a two-dimensional vector having a shape of the second sequence length (N) by the dimension (d), or the value vector (V) **315** can be a three-dimensional vector having a shape of the count of number of heads by second sequence length (N) by head dimension (d).

Through tiling, the accelerated attention mechanism can split the inputs (the query vector (Q) **305,** the key vector (K) **310,** and the value vector (V) **315**) into blocks. For example, a two-dimensional query vector (Q) **305** is split into query blocks Q₀, ..., Q_{T_r-1} of size [B_r, d] each, where B_r is a row block size and d is the head dimension. A two-dimensional key vector (K) **310** and is split into key blocks K₀, ..., K_{T_c-1} of size [B_c, d] each, where B_c is a column block size and d is the head dimension. A two-dimensional value vector (V) **315** is split into value blocks V₀, ..., V_{T_c-1} of size [B_c, d] each, where B_c is the column block size and d is the head dimension. (For a three-dimensional query vector (Q) 305, key vector (K) **310,** and value vector (V) **315** with an extra dimension for the count of number of heads, the process shown in Figures 3a, 3b, and 4 can repeat for each head. That is, there is another, outermost loop for the number of heads, as explained below.) Lines 1-3, 15, and 16 of pseudocode listing **300** include operations for an outer loop and lines 4-14 of pseudocode listing **300** include operations for an inner loop. In the outer loop, the accelerated attention mechanism loops over blocks of the query vector (Q) **305** and loads them from HBM to fast on-chip SRAM. For each query block, the accelerated attention mechanism loops on blocks of the key vector (K) **310** and the value vector (V) **315** in the inner loop, loading the blocks of the key vector (K) **310** and the value vector (V) **315** from HBM to SRAM, and writing the output of the attention computation back to HBM. In these examples, the HBM (like global memory in other examples) is larger and cheaper but also slower than the SRAM (like shared memory in the other examples).

In the accelerated attention mechanism pseudocode listing **300,** lines 3 and 13 include matrix multiplication operations and are executed in dedicated units for matrix multiplication. Lines 6-12 and 15 (and the addition part of line 13) include some element-wise operations and are executed outside the dedicated units for matrix multiplication.

Unlike in the conventional attention mechanism, with the accelerated attention mechanism, due to pipelining of operations, certain matrix multiplication operations (e.g., for a given query block and next key block) can be performed in parallel with certain element-wise operation (e.g., for the given query block and a given key block), despite the dependency between the matrix multiplication operations and element-wise operations. (The matrix multiplication operation for the given query block and given key block is performed in a prior iteration of an inner loop or before the first iteration of the inner loop for the given query block.)

Advantageously, the pipelining of certain operations in the accelerated attention mechanism works despite the dependency between the matrix multiplication operations and the element-wise operations (that use the results of the matrix multiplication operations), enabling the parallel execution of certain matrix multiplication operations and element-wise operations. The parallel execution of the matrix multiplication and element-wise operations can increase the speed of the attention mechanism without any quality loss.

While the described the accelerated attention mechanism is mathematically equivalent to FlashAttention-2 in terms of results produced for given inputs, the accelerated attention mechanism is more efficient.

Flowchart **400** illustrated in Figure 4 provides a visual representation of the logical flow of the accelerated attention mechanism, including the inner and outer loops of the pseudocode listing **300.**

The outer loop of the accelerated attention mechanism starts at **stage 402.** When the outer loop begins, a query block counter (i), an attention value matrix (Aᵢ), a key block counter (j), a current maximum value vector (curr_max), and a cumulative probability value vector (exsum) are initialized, as shown at stage **404.** Here, the query block counter (i) and the key block counter (j) are initialized to 0. The attention value matrix (Aᵢ) is initialized to 0 with size [B_r, d], the current maximum value vector (curr_max) is initialized to (-infinity) with size [B_r], and the cumulative probability value vector (exsum) is initialized to 0 with size[B_r].

An outer loop test condition (i in [0, M/B_r)) is shown at **decision 406. Decision 406** represents line 1 of pseudocode listing **300.** Line 1 of pseudocode listing **300** includes the operation (for i in [0, M/B_r)). Here, the accelerated attention mechanism can determine if the query block counter (i) is a value within [0, M/B_r) (inclusive of the lower boundary; exclusive of the upper boundary), where M is a sequence length.

If the outer loop test condition in **decision 406** is False, the outer loop of the accelerated attention mechanism can be ended, as shown in stage **408,** which represents line 16 of pseudocode listing **300.**

If the outer loop test condition in **decision 406** is True, attention scores can be determined for the given query block (Qᵢ) **320** and an initial key block (K₀) using the matrix multiplication operation (S=Qᵢ*K₀^{T}), as shown in **stage 410,** which represents line 3 of pseudocode listing **300.** Here the attention scores can be stored in an attention score matrix. (The determination of attention scores for the given query block (Qᵢ) **320** and an initial key block (K₀) is not shown in Figure 3B, which depicts operations for later key blocks in subsequent iterations of the inner loop.)

In each iteration of the outer loop, the key block counter (j) is reset to 0 (j=0), as shown in **stage 412.**

The accelerated attention mechanism can then enter an iteration (e.g., iteration with j = 0) of the inner loop. An inner loop test condition (j in [0, N/B_c)) is shown at **decision 414. Decision 414** represents line 4 of pseudocode listing 300. Line 4 of pseudocode listing 300 includes the operation (for j in [0, N/B_c)). Here, the accelerated attention mechanism can determine if the key block counter (j) is a value within [0, N/B_c) (inclusive of the lower boundary; exclusive of the upper boundary), where N is a sequence length.

If the inner loop test condition in **decision 414** is False, the accelerated attention mechanism exits the inner loop and returns to the outer loop. Here, the accelerated attention mechanism can normalize the attention values for the first query block (Qᵢ) **320,** as shown in **flow 416,** which represents line 15 of pseudocode listing **300. In flow 416,** the accelerated attention mechanism can normalize the attention values for the given query block (Qᵢ) 320 by executing an operation (Aᵢ /= exsum[:, newaxis]) to adjust (e.g., interpret or cast, such that the values from exsum are repeated along the new dimension, without actually transforming exsum in memory to hold the new repeated values explicitly) the dimensionality of cumulative probability values (exsum) for respective rows of the given query block (Qᵢ) **320** to match dimensionality of the attention values for the given query block (Qᵢ) **320;** and for respective elements of the attention values for the given query block, divide one of the attention values for the given query block (Qᵢ) **320** by a corresponding one of the cumulative probability values (exsum).

The accelerated attention mechanism can increment the query block counter (i), as shown in **stage 418.** Once the query block counter (i) is incremented, the accelerated attention mechanism can begin to determine attention values of a next query block (Qᵢ, for i that has been increment) (not shown in Figure 3B).

If the inner loop test condition in **decision 414** is True, the accelerated attention mechanism performs operations of an iteration of the inner loop. The accelerated attention mechanism can begin operations to set probability values for the given query block (Qᵢ) **320** and a given key block (Kⱼ) **325.** In an initial iteration (j=0) of the inner loop (not shown in Figure 3B), the given key block is the initial key block (K₀). In subsequent iterations of the inner loop (for j > 0, such as the given key block (Kⱼ) **325** shown in Figure 3B), the given key block (Kⱼ) **325** is a later key block. Based at least in part on the attention scores determined for the given key block (e.g., for the first iteration (j=0), the attention scores determined in **stage 410** for the given query block (Qᵢ) **320** and the initial key block (K₀); for a later iteration (j>0), the attention scores determined in stage **428** for the given query block (Qᵢ) **320** and the previous key block (Kⱼ, for the previous value of j)), operations are performed for the iteration of the inner loop. In particular, operations are performed as shown in **stage 420, stage 422,** and **stage 424,** which represent lines 6, 7, and 8 of pseudocode listing **300,** respectively. The probability values can be stored in a probability value matrix **345.** Here, the operations in **stage 420, stage 422,** and **stage 424** can implement a softmax function.

Implementing the softmax function can include setting a previous maximum value for each row of the given query block (Qᵢ) **320** to a current maximum value of the row, as shown in **stage 420.** For each row of the given first query block (Qᵢ) **320,** the current maximum value of the row can be set to the greater value between (a) the current maximum value of the row and (b) a maximum value of a corresponding row of the attention scores for each row of the given query block (Qᵢ) **320** and the given key block (Kⱼ) **325,** as shown in **stage 422.**

In **stage 424,** the dimensionality of the current maximum values of the respective rows of the given query block (Qᵢ) **320** can be adjusted to match the dimensionality of the attention scores for the given query block (Qᵢ) **320** and the given key block (Kⱼ) **325.** For respective elements of the probability values for the given query block (Qᵢ) **320** and the given key block (Kⱼ) **325,** the probability value can be set using a corresponding one of the attention scores for the given query block (Qᵢ) **320** and the given key block (Kⱼ) **325.** The probability value can be set by determining a difference between the corresponding one of the attention scores S and a corresponding one of the adjusted current maximum values (curr_max, after the operation curr_max[:, newaxis]); and calculating a result of applying the difference as an exponent to a base e (P=(exp(S-curr_max[:, newaxis]))).

Once the probability values for the given query block (Qᵢ) **320** and the given key block (Kⱼ) **325** are set, the accelerated attention mechanism can enter an additional inner loop test condition, as shown in **decision 426,** which represents part of line 9 of pseudocode listing **300.** In **decision 426,** the inner loop counter (j) can be checked to determine if the iteration of the inner loop is for a final key block among the key blocks. Here, the accelerated attention mechanism determines if j < N/B_c - 1 (note that j = N/B_c-1 for the final iteration of the inner loop).

If the inner loop test condition shown in **decision 426** is False, the given key block (Kⱼ) **325** is the final key bock of the key vector (K) for processing of the given query block (Qᵢ) **320.** In this case, the accelerated attention mechanism can skip the matrix multiplication operation in **stage 428,** since there is no next key block of the key vector (K) for processing of the given query block (Qᵢ) **320.** Instead, the accelerated attention mechanism can proceed directly to **stage 430.**

If the inner loop test condition shown in **decision 426** is True, attention scores for the given query block (Qᵢ) **320** and the next key block (Kⱼ₊₁) **335** can be determined by executing a matrix multiplication operation (S = Qi*Kⱼ₊₁^{T}), as shown in **stage 428,** which represents part of line 9 of pseudocode listing **300.** Here, performing the matrix multiplication operation to determine the attention scores for the given query block (Qᵢ) **320** and the next key block (Kⱼ₊₁) **335** is contingent on the given key block (Kⱼ) **325** not being the final key block of the key vector (K) for processing of the given query block (Qᵢ) **320.** The attention scores are stored in an attention score matrix **350** for the given query block (Qᵢ) **320** and the next key block (Kⱼ₊₁) **335.** (To the extent operations using the attention scores for the given query block (Qᵢ) **320** and the given key block (Kⱼ) **325** have completed, the previous attention scores in the attention matrix can be overwritten to score the attention scores for the given query block (Qᵢ) **320** and the next key block (Kⱼ₊₁) **335**.)

In the case where the inner loop test condition shown in **decision 426** is True, the accelerated attention mechanism can perform, concurrently with **stage 428,** operations to update the attention values for the given query block (Qᵢ) **320** based on the probability values for the given query block (Qᵢ) **320** and the given key block (Kⱼ) **325,** as shown in **stage 430, stage 432,** and **stage 434,** which represent lines 10, 11, and 12 of pseudocode listing **300,** respectively. Here, the operations in **stage 430, stage 432,** and **stage 434** can be executed in parallel with **stage 428.**

If the inner loop test condition shown in **decision 426** is False, the given key block (Kⱼ) **325** is the final key bock of the key vector (K) for processing of the given query block (Qᵢ) **320.** In this case, the accelerated attention mechanism can skip the matrix multiplication operation in **stage 428,** since there is no next key block of the key vector (K) for processing of the given query block (Qᵢ) **320.** Instead, the accelerated attention mechanism can proceed directly to **stage 430, stage 432,** and **stage 434,** where the accelerated attention mechanism can perform operations to update the attention values for the given query block (Qᵢ) **320** based on the probability values for the given query block (Qᵢ) **320** and the given key block (Kⱼ) **325.**

In **stage 430,** the accelerated attention mechanism can execute an operation (alpha = exp(prev_max - curr_max)) to determine scaling values based on differences between previous maximum values and current maximum values for respective rows of the given query block (Qᵢ) **320.** Here, determining the scaling values can include, for each of the respective rows of the given query block (Qᵢ) **320,** determining a difference between a previous maximum value for the row and a current maximum value for the row and calculating a result of applying the difference (prev _max - curr_max) as an exponent to a base e. The scaling values can be organized as a one-dimensional vector having a shape of a row block size. The row block size of the one-dimensional vector can match a row block size of the given query block (Qᵢ) **320.**

In **stage 432,** the accelerated attention mechanism can execute an operation (Ai*= alpha[:, newaxis]) to update the attention values for the given query block (Qᵢ) **320** based on the scaling values determined in **stage 430.** Here, the updating of the attention values for the given query block (Qᵢ) **320** can include adjusting (e.g., interpreting or casting, such that the values from alpha are repeated along the new dimension, without actually transforming alpha in memory to hold the new repeated values explicitly) dimensionality of the scaling values to match the dimensionality of the attention values for the given query block (Qᵢ) **320,** where (alpha[:, newaxis]) represents the adjusted scaling values. After the adjusting (e.g., interpreting or casting) the dimensionality of the scaling values, the scaling values can be organized as a two-dimensional vector having a shape of the row block size by a head dimension. Then, for respective elements of the attention values for the given query block, the accelerated attention mechanism can multiply one of the attention values for the given query block (Qᵢ) **320** by a corresponding one of the adjusted scaling values. The (updated) attention values for the given query block (Qᵢ) **320** are stored in an attention value matrix (Aᵢ) **355.**

In **stage 434,** the accelerated attention mechanism can, for respective rows of the given query block (Qᵢ) **320,** execute an operation (exsum += sum_per_row(P)) to determine a cumulative probability value (sum_per_row(P)) for a corresponding row of the probability values for the given query block (Qᵢ) **320** and the given key block (Kⱼ) **325.** The accelerated attention mechanism can add the cumulative probability value (sum_per_row(P)) for the corresponding row of the probability values to a cumulative probability value (exsum) for the row of the given query block (Qᵢ) **320.**

Once **stage 432** has been completed (to scale the (current) attention values), the accelerated attention mechanism can begin **stage 436,** where the accelerated attention mechanism can perform a matrix multiplication operation (P*V) using the probability values and a given value block (Vⱼ) **340** to determine attention value updates for the given query block (Qᵢ) **320** and the given key block (Kⱼ) **325.** Then, for respective elements the attention values for the given query block (Qᵢ) **320,** the accelerated attention mechanism can add one of the attention value updates (from the results of the matrix multiplication operation (P*V)) to a corresponding one of the attention values for the given query block (Qᵢ) **320.**

In **stage 436,** the matrix multiplication operation uses the probability values (P) 345 for the given query block (Qᵢ) **320** and given key block (Kⱼ) **325,** as well as the given value block (Vⱼ) **340,** as inputs. The matrix multiplication operation produces, as output, an attention value update block for given query block (Qᵢ) **320,** the given key block (Kⱼ) **325,** and the given value block (Vⱼ) **340,** and the attention value update block is added to the attention values (Aᵢ) **355** for given query block (Qᵢ) **320.**

Before **stage 436** of a given iteration of the inner loop is complete, but after **stage 428** of the given iteration has completed, the key block counter (j) can be incremented, as shown in **stage 438,** and the accelerated attention mechanism can begin some operations of a next iteration of the inner loop, by returning to **decision 414.** Here, some operations of the next iteration of the inner loop can begin even before the given iteration has completed executing **stage 436** because the attention scores for the given query block (Qᵢ) **320** and the next key block (Kⱼ₊₁) **335** were determined by executing (S = Qi*Kⱼ₊₁^{T}) in **stage 428** in the given iteration. That is, the operations in **stage 420, stage 422,** and **stage 424** of the next iteration (using the results of S = Qi*Kⱼ₊₁^{T} in the given iteration) can be executed concurrently with **stage 436** of the given iteration. (Note that the loading of the next value block for the incremented value of j in the next iteration (see line 5 of the pseudocode listing **300**) may be deferred until the completion of **stage 436** of the given iteration.)

Figures 3A, 3B, and 4 illustrate operations performed for a single head of an attention mechanism. For a three-dimensional query vector (Q) **305,** key vector (K) **310,** and value vector (V) **315** (with an extra dimension for the count of number of heads), the operations shown in Figures 3a, 3b, and 4 can repeat for each head, iterating through the count of number of heads in another, outermost loop for the number of heads. Thus, for example, the query vector (Q) can be a three-dimensional vector having a shape of a count of number of heads (n_head) by first sequence length (M) by head dimension (d) - Q:[n_head, M, d]. The key vector (K) can be a three-dimensional vector having a shape of the count of number of heads (n_head) by second sequence length (N) by head dimension (d) - K:[n_head, N, d]. Similarly, the value vector (V) can be a three-dimensional vector having a shape of the count of number of heads (n_head) by second sequence length (N) by head dimension (d) - V:[n_head, N, d].

Indeed, each head can be processed independently via an outer-most loop. In practice, given the independence between heads, the iterations of the outer-most loop can run in parallel rather than sequentially. Parallelism can be between multiple GPUs (dividing the number of heads across the GPUs) and/or parallelism can be accomplished by dividing heads across compute resources within a single GPU.

Moreover, in some cases, the query vector (Q), the key vector (K), and the value vector (V) have the same count of heads. More typically, however, the query vector (Q), the key vector (K), and the value vector (V) can be different counts of heads. In particular, the query vector (Q) is often much larger than the key vector (K) and the value vector (V). In these cases, portions of a smaller key vector (K) and value vector (V) can be reused multiple times with a larger query vector (Q). For example, the query vector (Q) may be four times longer than smaller key vector (K) and value vector (V), and each block of the smaller key vector (K) and value vector (V) would be reused four times for a single pass through processing of the query vector (Q).

More generally, the key vector (K) and value vector (V) are reused for some number of times that depends on n_group, which is a grouping factor. For example, as noted above, the query vector (Q) can be a three-dimensional vector - Q:[n_head, M, d]. The key vector (K) can be a three-dimensional vector having a shape of the count of number of heads divided by the grouping factor (n_head/n_group) by second sequence length (N) by head dimension (d) - K:[n_head/n_group, N, d]. Similarly, the value vector (V) can be a three-dimensional vector having a shape of the count of number of heads divided by the grouping factor (n_head/n_group) by second sequence length (N) by head dimension (d) - V:[n_head/n_group, N, d].

As an example, the query vector (Q) could be a three-dimensional vector with a head dimension of 20 and the key vector (K) and value vector (V) could be three-dimensional vectors with a head dimension of five (for a ratio of four). In this example, the computation would be the same as the uniform case where each vector (Q, K, V) has a head dimension of 20, except that each K or V head is reused 4 times for different Q heads. Here, the following per-head inputs could be provided to the Example in Figure 3A:
Q[0] K[0] V[0]
Q[1] K[0] V[0]
Q[2] K[0] V[0]
Q[3] K[0] V[0]
Q[4] K[1] V[1]
Q[5] K[1] V[1]
Q[6] K[1] V[1]
Q[7] K[1] V[1]
...

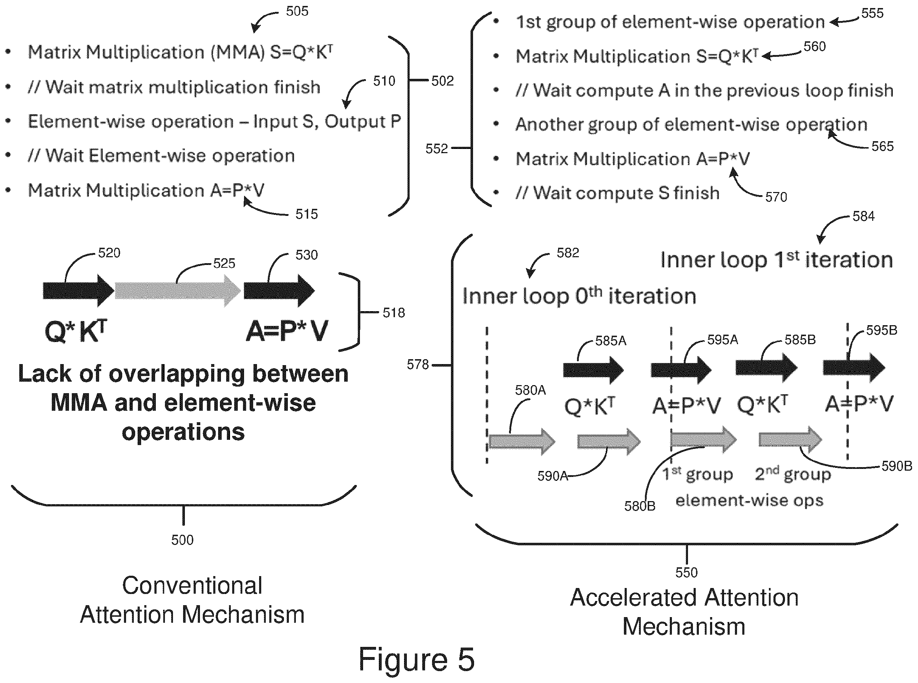

**Figure 5** illustrates graphical representations comparing the conventional attention mechanism illustrated in Figures 2A-2C and the accelerated attention mechanism illustrated in Figures 3A and 3B. Referring to Figure 5, graphical representation **500** is a representation of the conventional attention mechanism illustrated in Figures 2A-2C and graphical representation **550** is a representation of the accelerated attention mechanism illustrated in Figures 3A and 3B.

Graphical representation **500** shows the staging of operations **502** for the inner loop of the conventional attention mechanism, which is illustrated in lines 3-13 of pseudocode listing **200** of Figure 2A. Graphical representation **500** also includes a visualization chart **518** visualizing the staging of operations **502.**

Graphical representation **550** shows the staging of operations **552** for the inner loop of the accelerated attention mechanism, which is illustrated in lines 4-14 of pseudocode listing **300** of Figure 3A. Graphical representation **550** also includes a visualization chart **578** visualizing the staging of operations **552.**

As previously described, attention mechanisms have two types of operations, generally - matrix multiplication operations and other operations. Matrix multiplication operations are typically executed in dedicated units for matrix multiplication within a GPU or AI accelerator (e.g., Tensor Cores developed by Nvidia Corporation and used in Nvidia GPUs). Other operations (in particular, element-wise operations) are executed outside the dedicated units for matrix multiplication within the GPU or AI accelerator.

In the conventional attention mechanism, lines 5 and 12 of pseudocode listing **200** of Figure 2A include matrix multiplication operations; and lines 6-11 (and the addition part of line 12) of pseudocode listing **200** of Figure 2A include other, non-matrix multiplication operations (such as element-wise operations). In the accelerated attention mechanism, lines 9 and 13 of pseudocode listing **300** of Figure 3A include matrix multiplication operations; and lines 6-8 and 10-12 (and the addition part of line 13) of pseudocode listing **300** of Figure 3A include other, non-matrix multiplication operations (such as element-wise operations).

Referring to the illustrative example of graphical representation **500,** the staging of operations **502** for the inner loop of the conventional attention mechanism includes operation **505,** operation **510,** and operation **515.** The visualization chart **518** includes arrow **520** representing operation **505,** arrow **525** representing operation **510,** and arrow **530** representing operation **515.**

Operation **505** is a first matrix multiplication operation (S=Q*K^{T}) of the inner loop and corresponds to line 5 of pseudocode listing **200** of Figure 2A. Operation **510** is a group of element-wise operations and corresponds to lines 6-11 of pseudocode listing **200** of Figure 2A. Operation **515** is a second matrix multiplication operation (A=P*V) of the inner loop and corresponds to the matrix multiplication part of line 12 of pseudocode listing **200** of Figure 2A.

As previously described, there is dependency between the matrix multiplication operations and the element-wise operations in the conventional attention mechanism, which limits these operations to be run sequentially. For example, during the implementation of the conventional attention mechanism, execution of the first matrix multiplication operation (operation **505**) is performed. The conventional attention mechanism must then wait until the first matrix multiplication operation (operation **505**) is finished before proceeding to the next operation (operation **510**). The conventional attention mechanism must wait because operation **510** uses, as an input, the output of operation **505** (S).

After operation **505** is finished, then execution of the group of element-wise operations (operation **510**) is performed. The conventional attention mechanism must then wait until the group of element-wise operations (operation **510**) is finished before proceeding to the next operation (operation **515**). Here, the conventional attention mechanism must wait because operation **515** uses the output of operation **510** (P) as an input to determine P*V. Then, after operation **510** is finished, the execution of the second matrix multiplication operation (operation **515**) is performed.

Since the operations run sequentially, there is no overlap between the matrix multiplication operations and other (non-matrix multiplication) operations. Thus, for such operations, there is no overlap in usage between the different parts of the GPU or AI accelerator. In particular, there is no overlap with work executed inside dedicated units for matrix multiplication and work executed outside the dedicated units for matrix multiplication. As can be seen in the visualization chart **518** visualizing the staging of operations **502,** there is a lack of overlapping between the matrix multiplication operations (arrow **520** and arrow **530**) and the element-wise operations (arrow **525**) in the conventional attention mechanism. The lack of overlap between the operations leads to inefficient use of the overall GPU or AI accelerator.

Referring to the illustrative example of graphical representation **550,** the staging of operations **552** for the inner loop of the accelerated attention mechanism can include operation **555,** operation **560,** operation **565,** and operation **570.** The visualization chart **578** includes arrows (arrow **580A** and arrow **580B**) representing operation **555,** arrows (arrow **585A** and arrow **585B**) representing operation **560,** arrows (arrow **590A** and arrow **590B**) representing operation **565,** and arrows (arrow **595A** and arrow **595B**) representing operation **570.**

Operation **555** is a first group of element-wise operations (e.g., for the softmax function) of the inner loop and corresponds to lines 6, 7, and 8 of pseudocode listing **300** of Figure 3A. Operation **560** is the first matrix multiplication operation (S=Q*K^{T}) of the inner loop and corresponds to line 9 of pseudocode listing **300** of Figure 3A. Operation **565** is a second group of element-wise operations (e.g., operations to determine scaling values) of the inner loop and corresponds to lines 10, 11, and 12 of pseudocode listing **300** of Figure 3A. Operation **570** is the second matrix multiplication operation (P*V) of the inner loop and corresponds to the matrix multiplication part of line 13 of pseudocode listing **300** of Figure 3A.

An example implementation of an iteration of the inner loop following the staging of operations **552** can include executing operation **555** (the first group of element-wise operations) first. After operation **555** is finished in a current iteration of the inner loop, execution of operation **560** (the first matrix multiplication operation) can begin in the current iteration. While the accelerated attention mechanism is executing operation **560** in the current iteration (e.g., with a hardware unit dedicated to matrix multiplication operations), the accelerated attention mechanism can concurrently execute operation **565** (the second group of element-wise operations) (e.g., with other hardware units) in the current iteration. In the example implementation, the accelerated attention mechanism waits until operation **570** (the second matrix multiplication operation (P*V)) and corresponding update to attention values (Aᵢ += P*V) of the previous iteration of the inner loop are complete before beginning operation **565** in the current iteration. Once operation **565** is finished in the current iteration, the accelerated attention mechanism can begin operation **570,** which is the second matrix multiplication operation (P*V) of the current iteration of the example implementation. While the accelerated attention mechanism is executing operation **570** (e.g., with a hardware unit dedicated to matrix multiplication operations) in the current iteration, the accelerated attention mechanism can concurrently execute operation **555** (the first group of element-wise operations) (e.g., with other hardware units) in the next iteration of the inner loop.

In the visualization chart **578** visualizing the staging of operations **552,** implementations of two inner loop iterations (e.g., iteration 0 **582** (that is, j=0) for determining attention values for a given query block and key block 0 and iteration 1 **584** (that is, j=1) for determining attention values for the given query block and key block 1) are shown.

As can be seen in iteration 0 **582,** operation **555** is executed. In iteration 0 **582,** operation **555** is represented by arrow **580A** and includes the first group of element-wise operations of iteration 0 **582,** which determine probability values for the given query block and key block 0. When the execution of the first group of element-wise operations for the given query block and key block 0 in operation **555** of iteration 0 **582** is complete, operation **560** can be executed. In iteration 0 **582,** operation **560** is represented by arrow **585A** and includes the first matrix multiplication operation of iteration 0 **582,** which determines attention scores for the given query block and next key block (key block 1) as S=Qᵢ*K₁^{T}.

While operation **560** is executing in iteration 0 **582,** operation **565** can begin concurrently executing in iteration 0 **582.** In iteration 0 **582,** operation **565** is represented by arrow **590A** and includes the second group of element-wise operations of iteration 0 **582,** which determine scaling values for the given query block and key block 0. Here, the concurrent execution of operation **560** and operation **565** can be seen by the overlap of arrow **585A** and arrow **590A.**

When operation **565** has finished executing in iteration **0 582,** operation **570** can begin executing in iteration 0 **582.** In iteration 0 **582,** operation **570** is represented by arrow **595A** and includes the second matrix multiplication of iteration 0 **582,** which is performed as part of determining attention values for the given query block and key block 0 (Aᵢ += P*V).

While operation **570** is executing in iteration 0 **582,** iteration 1 **584** can begin. Specifically, in iteration 1 **584,** operation **555** can begin concurrently executing with operation **570** of iteration 0 **582.** In iteration 1 **584,** operation **555** is represented by arrow **580B** and includes the first group of element-wise operations of iteration 1 **584,** which determine probability values for the given query block and key block 1. Here, the concurrent execution of operation **570** in iteration 0 **582** and operation **555** of iteration 1 **584** can be seen by the overlap of arrow **595A** and arrow **580B.**

When the execution of the first group of element-wise operations for the given query block and key block 1 in operation **555** of iteration **1 584** is complete, operation **560** can be executed in iteration 1 **584.** In iteration 1 **584,** operation **560** is represented by arrow **585B** and includes the first matrix multiplication operation of iteration 1 **584,** which determines attention scores for the given query block and the following key block (key block 2) as S=Qᵢ*K₂^{T}.

While operation **560** is executing in iteration 1 **584,** operation **565** can begin concurrently executing in iteration 1 **584.** In iteration 1 **584,** operation **565** is represented by arrow **590B** and includes the second group of element-wise operations of iteration 1 **584,** which determine scaling values for the given query block and key block 1. Here, the concurrent execution of operation **560** and operation **565** can be seen by the overlap of arrow **585B** and arrow **590B.**

When operation **565** has finished executing in iteration 1 **584,** operation **570** can begin executing in iteration 1 **584.** In iteration 1 **584,** operation **570** is represented by arrow **595B** and includes the second matrix multiplication of iteration 1 **584,** which is performed as part of determining attention values for the given query block and key block 1 (Aᵢ += P*V). While operation **570** is executing in iteration 1 **584,** the next iteration (not shown) can begin. Specifically, in iteration 2 (not shown), operation **555** can begin concurrently executing with operation **570** of iteration 1 **584.**

Unlike in the conventional attention mechanism, with the accelerated attention mechanism, due to pipelining of operations, certain matrix multiplication operations can be performed in parallel with certain element-wise operations, despite the dependency between the matrix multiplication operations and the element-wise operations. Advantageously, the accelerated attention mechanism uses reordering of operations (compared to conventional acceleration implementations) and pipelining to enable the parallel execution of matrix multiplication operations and element-wise operations. The parallel execution of the matrix multiplication and element-wise operations can increase the speed of the attention mechanism without any quality loss.

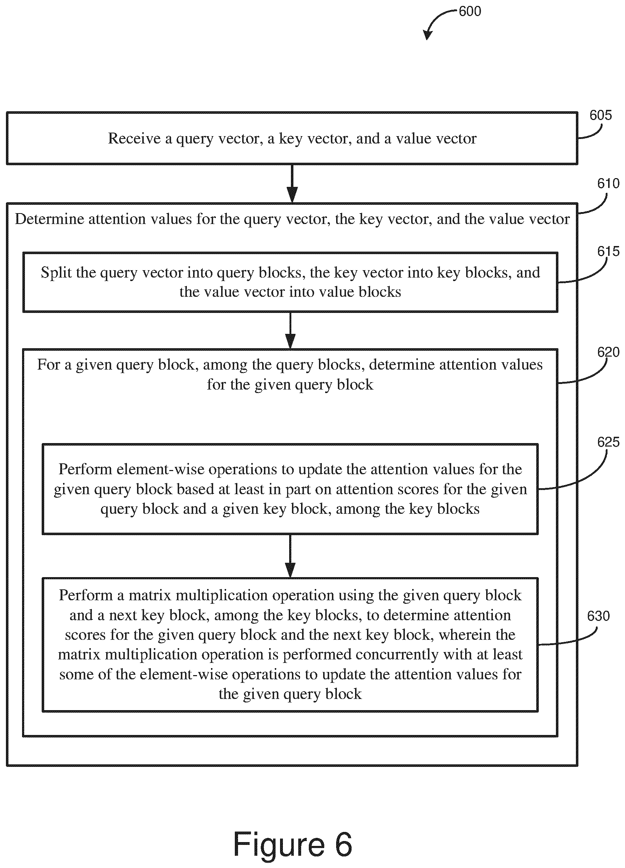

**Figure 6** illustrates an example process flow diagram implementing an accelerated attention mechanism with parallel operations according to certain embodiments. Referring to Figure 6, at step (605**)** a query vector, a key vector, and a value vector can be received. The query vector can be a multi-dimensional vector (e.g., a two-dimensional vector having a shape of a first sequence length by a head dimension or a three-dimensional vector having a shape of a count of number of heads by first sequence length by head dimension). The key vector can be a multi-dimensional vector (e.g., a two-dimensional vector having a shape of a second sequence length by the head dimension or a three-dimensional vector having a shape of the count of number of heads by second sequence length by head dimension). The value vector can be a multi-dimensional vector (e.g., a two-dimensional vector having a shape of the second sequence length by the head dimension or a three-dimensional vector having a shape of the count of number of heads by second sequence length by head dimension).

At step (**610**) attention values for the query vector, the key vector, and the value vector can be determined. To determine the attention values in step (**610**), the query vector can be split into query blocks, the key vector split into key blocks, and the value vector split into value blocks at step (**615**). Attention values for a given query block, among the query blocks, can be determined at step (**620**). Here, each query block, among the query blocks, can be a two-dimensional vector having a shape of a row block size by the head dimension. Each key block, among the key blocks, can be a two-dimensional vector having a shape of a column block size by the head dimension. Each value block, among the value blocks, can be a two-dimensional vector having a shape of the column block size by the head dimension.

Determining the attention values for the given query block in step (**620**) can include step (**625**) and step (**630**). Step (**625**) includes performing element-wise operations to update the attention values for the given query block based at least in part on attention scores for the given query block and a given key block, among the key blocks. The given key block can be checked to determine if the given key block is a final key block among the key blocks. In this case, the performing the matrix multiplication operation to determine the attention scores for the given query block and the next key block is contingent on the given key block not being the final key block.

Updating the attention values for the given query block by performing the element-wise operations in step (**625**) can include determining scaling values based on differences between previous maximum values and current maximum values for respective rows of the given query block. The attention values for the given query block can be updated based on the scaling values. The scaling values can be organized as a one-dimensional vector having a shape of a row block size. The row block size of the one-dimensional vector can match a row block size of the given query block.

Determining the scaling values can include, for each of the respective rows of the given query block, determining a difference between a previous maximum value for the row and a current maximum value for the row, and calculating a result of applying the difference as an exponent to a base e.

Updating the attention values for the given query block of step (**625**) can include adjusting dimensionality of the scaling values to match the given query block. After the adjusting the dimensionality of the scaling values, the scaling values can be organized as a two-dimensional vector having a shape of the row block size by a head dimension. For respective elements of the attention values for the given query block, one of the attention values for the given query block can be multiplied by a corresponding one of the adjusted scaling values.

Determining the attention values for the given query block in step (**620**) can further include performing element-wise operations to set probability values for the given query block and the given key block based at least in part on the attention scores for the given query block and the given key block.

The operations to set the probability values for the given query block and the given key block can implement a softmax function. The implementation of the softmax function can include, for respective rows of the given query block, setting a previous maximum value for the row to a current maximum value of the row. For the respective rows of the given query block, the current maximum value of the row can be set to a greater of (a) the current maximum value of the row and (b) a maximum value of a corresponding row of the attention scores for the given query block and the given key block. The dimensionality of the current maximum values of the respective rows of the given query block can be adjusted to match the attention scores for the given query block and the given key block.

For respective elements of the probability values for the given query block and the given key block, the probability value can be set using a corresponding one of the attention scores for the given query block and the given key block. The probability value can be set by determining a difference between the corresponding one of the attention scores and a corresponding one of the adjusted current maximum values; and calculating a result of applying the difference as an exponent to a base e.

Step (**630**) includes performing a matrix multiplication operation using the given query block and a next key block, among the key blocks, to determine attention scores for the given query block and the next key block. The matrix multiplication operation can be performed concurrently with at least some of the element-wise operations to update the attention values for the given query block.

The attention scores for the given query block and the given key block (computed previously and used in the element-wise operations) can be organized, in a first attention scores block, as a two-dimensional vector having a shape of the row block size by the column block size. The attention scores for the given query block and the next key block (computed in step 630) can be organized, in a second attention scores block, as a two-dimensional vector having a shape of the row block size by the column block size. The attention values for the given query block can be organized, in an attention values block, as a two-dimensional vector having a shape of the row block size by the head dimension.

Determining the attention values for the given query block in step (**620**) can further include performing a matrix multiplication operation using the probability values and a given value block, among the value blocks, to determine attention value updates for the given query block and the given key block. For respective elements of the attention values for the given query block, one of the attention value updates can be added to a corresponding one of the attention values for the given query block.

The matrix multiplication operation using the probability values and the given value block uses, as inputs, the probability values and the given value block. The matrix multiplication operation using the probability values and the given value block produces, as output, an attention value update block including the attention value updates for the given query block and the given key block.

Determining the attention values for the given query block in step (**620**) can further include, for respective rows of the given query block, determining a cumulative probability value for a corresponding row of the probability values for the given query block and the given key block and adding the cumulative probability value for the corresponding row of the probability values to a cumulative probability value for the row of the given query block.

In cases where the given key block is an initial key block, determining the attention values for the given query block further includes, before performing the element-wise operations to update the attention values for the given query block (based at least in part on the attention scores for the given query block and the given key block), performing a matrix multiply operation using the given query block and the given key block to determine the attention scores for the given query block and the given key block.

In cases where the given key block is a final key block, determining the attention values for the given query block further includes, for the final key block, performing element-wise operations to update the attention values for the given query block based at least in part on attention scores for the given query block and the final key block. The attention scores for the given query block and the final key block can be attention scores determined in a previous iteration. Here, the matrix multiplication operation to determine attention scores can be skipped in the current iteration since there is no next key block.

In cases where the given key block is not the final key block of the key vector, determining the attention values for the given query block further includes, for each of one or more other blocks among the key blocks as the given key block, repeating performing the element-wise operations and performing the matrix multiplication operation. In other words, for the given query block, the mechanism iterates through the respective key blocks of the key vector (e.g., in iterations of an inner loop as described with reference to Figures 3A, 3B, and 4).

Determining the attention values for the given query block in step (620) can further include normalizing the attention values for the given query block. The attention values can be normalized by adjusting dimensionality of cumulative probability values for respective rows of the given query block to match the given query block. For respective elements of the attention values for the given query block, one of the attention values for the given query block can be divided by a corresponding one of the adjusted cumulative probability values.

In cases where the given query block is not the final query block of the query vector, attention values can be similarly determined for each subsequent query block of the query vector. For a subsequent query block, operations are repeated for respective key blocks of the key vector. In other words, the mechanism iterates through the respective query blocks of the query vector (e.g., in iterations of an outer loop as described with reference to Figures 3A, 3B, and 4).

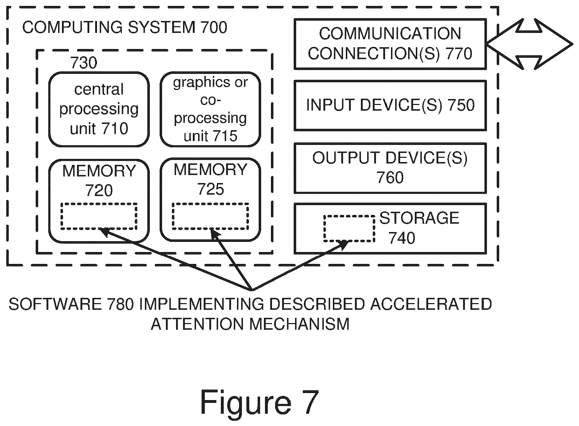

Figure 7 illustrates a generalized example of a suitable computing system **700** in which the described innovations may be implemented. The computing system **700** is not intended to suggest any limitation as to scope of use or functionality, as the innovations may be implemented in diverse general-purpose or special-purpose computing systems.

Referring to Figure 7, the computing system **700** includes one or more processing units **710, 715** and memory **720, 725.** In Figure 7, this basic configuration **730** is included within a dashed line. The processing units **710, 715** execute computer-executable instructions. A processing unit can be a general-purpose central processing unit (CPU), processor in an application-specific integrated circuit (ASIC), or any other type of processor. In a multi-processing system, multiple processing units execute computer-executable instructions to increase processing power. For example, Figure 7 shows a central processing unit **710** as well as a graphics processing unit or co-processing unit **715.** The tangible memory **720, 725** may be volatile memory (e.g., registers, cache, RAM), non-volatile memory (e.g., ROM, EEPROM, flash memory, etc.), or some combination of the two, accessible by the processing unit(s). The memory **720, 725** stores software **780** implementing one or more innovations described herein, in the form of computer-executable instructions suitable for execution by the processing unit(s).

A computing system may have additional features. For example, the computing system **700** includes storage **740,** one or more input devices **750,** one or more output devices **760,** and one or more communication connections **770.** An interconnection mechanism (not shown) such as a bus, controller, or network interconnects the components of the computing system **700.** Typically, operating system software (not shown) provides an operating environment for other software executing in the computing system **700,** and coordinates activities of the components of the computing system **700.**

The tangible storage **740** may be removable or non-removable, and includes magnetic disks, magnetic tapes or cassettes, CD-ROMs, DVDs, or any other medium which can be used to store information and which can be accessed within the computing system **700.** The storage **740** stores instructions for the software **780** implementing one or more innovations described herein.

The input device(s) **750** may be a touch input device such as a keyboard, mouse, pen, or trackball, a voice input device, a scanning device, or another device that provides input to the computing system **700.** For video encoding, the input device(s) **750** may be a camera, video card, TV tuner card, or similar device that accepts video input in analog or digital form, or a CD-ROM or CD-RW that reads video samples into the computing system **700.** The output device(s) **760** may be a display, printer, speaker, CD-writer, or another device that provides output from the computing system **700.**

The communication connection(s) **770** enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

In an embodiment, a method for computing attention values in a machine learning model is defined. The method comprises receiving a query vector, a key vector, and a value vector; and determining attention values for the query vector, the key vector, and the value vector, including: splitting the query vector into query blocks, the key vector into key blocks, and the value vector into value blocks; and for a given query block, among the query blocks, determining attention values for the given query block, wherein the determining the attention values for the given query block includes: performing element-wise operations to update the attention values for the given query block based at least in part on attention scores for the given query block and a given key block, among the key blocks; and performing a matrix multiplication operation using the given query block and a next key block, among the key blocks, to determine attention scores for the given query block and the next key block, wherein the matrix multiplication operation is performed concurrently with at least some of the element-wise operations to update the attention values for the given query block.

In some examples, the query vector is a multi-dimensional vector, the multi-dimensional vector being a two-dimensional vector having a shape of a first sequence length by a head dimension or a three-dimensional vector having a shape of a count of number of heads by the first sequence length by the head dimension; the key vector is a multi-dimensional vector, the multi-dimensional vector being a two-dimensional vector having a shape of a second sequence length by the head dimension or a three-dimensional vector having a shape of the count of number of heads by the second sequence length by the head dimension; the value vector is a multi-dimensional vector, the multi-dimensional vector being a two-dimensional vector having a shape of the second sequence length by the head dimension or a three-dimensional vector having a shape of the count of number of heads by the second sequence length by the head dimension; each query block, among the query blocks, is a two-dimensional vector having a shape of a row block size by the head dimension; each key block, among the key blocks, is a two-dimensional vector having a shape of a column block size by the head dimension; each value block, among the value blocks, is a two-dimensional vector having a shape of the column block size by the head dimension; the attention scores for the given query block and the given key block are organized, in a first attention scores block, as a two-dimensional vector having a shape of the row block size by the column block size; the attention scores for the given query block and the next key block are organized, in a second attention scores block, as a two-dimensional vector having a shape of the row block size by the column block size; and the attention values for the given query block are organized, in an attention values block, as a two-dimensional vector having a shape of the row block size by the head dimension.

In some examples, the matrix multiplication operation comprises using the given query block and the next key block uses, as inputs, the given query block and a transpose of the next key block, and wherein the matrix multiplication operation using the given query block and the next key block produces, as output, an attention score block including the attention scores for the given query block and the next key block.

In some examples, the performing the element-wise operations to update the attention values for the given query block includes: determining scaling values based on differences between previous maximum values and current maximum values for respective rows of the given query block; and updating the attention values for the given query block based on the scaling values, including: adjusting dimensionality of the scaling values to match the given query block; and for respective elements of the attention values for the given query block, multiplying one of the attention values for the given query block by a corresponding one of the adjusted scaling values.

In some cases of the above example, the determining the scaling values includes, for each of the respective rows of the given query block comprises: determining a difference between a previous maximum value for the row and a current maximum value for the row; and calculating a result of applying the difference as an exponent to a base e.

In addition or as an alternative, in some cases of the above example, the scaling values are organized as a one-dimensional vector having a shape of a row block size, the row block size of the one-dimensional vector matching a row block size of the given query block; and after the adjusting the dimensionality of the scaling values, the scaling values are organized as a two-dimensional vector having a shape of the row block size by a head dimension.

In some examples, the determining the attention values for the given query block further includes checking whether the given key block is a final key block among the key blocks, wherein the performing the matrix multiplication operation to determine the attention scores for the given query block and the next key block is contingent on the given key block not being the final key block.

In some examples, determining the attention values for the given query block further includes: performing element-wise operations to set probability values for the given query block and the given key block based at least in part on the attention scores for the given query block and the given key block.

In some cases of the above example, the operations to set the probability values for the given query block and the given key block implement a SoftMax function. Optionally, the operations to set the probability values for the given query block and the given key block that implements a SoftMax function include: for respective rows of the given query block, setting a previous maximum value for the row to a current maximum value of the row; for the respective rows of the given query block, setting the current maximum value of the row to a greater of the current maximum value of the row and a maximum value of a corresponding row of the attention scores for the given query block and the given key block; adjusting dimensionality of the current maximum values of the respective rows of the given query block to match the attention scores for the given query block and the given key block; and for respective elements of the probability values for the given query block and the given key block, setting the probability value using a corresponding one of the attention scores for the given query block and the given key block. In addition or as an alternative, optionally, for the respective elements of the probability values, the setting the probability value includes: determining a difference between the corresponding one of the attention scores and a corresponding one of the adjusted current maximum values; and calculating a result of applying the difference as an exponent to a base e.

In addition or as an alternative, in some cases of the above example, the determining the attention values for the given query block further includes: performing a matrix multiplication operation using the probability values and a given value block, among the value blocks, to determine attention value updates for the given query block and the given key block; and for respective elements the attention values for the given query block, adding one of the attention value updates to a corresponding one of the attention values for the given query block. Optionally, the matrix multiplication operation using the probability values and the given value block uses, as inputs, the probability values and the given value block, and wherein the matrix multiplication operation using the probability values and the given value block produces, as output, an attention value update block including the attention value updates for the given query block and the given key block.

In addition or as an alternative, in some cases of the above example, the determining the attention values for the given query block further includes, for respective rows of the given query block: determining a cumulative probability value for a corresponding row of the probability values for the given query block and the given key block; and adding the cumulative probability value for the corresponding row of the probability values to a cumulative probability value for the row of the given query block.

In some examples, the given key block is an initial key block, among the key blocks, and wherein the determining the attention values for the given query block further includes, before the performing element-wise operations to update the attention values for the given query block based at least in part on the attention scores for the given query block and the given key block: performing a matrix multiply operation using the given query block and the given key block to determine the attention scores for the given query block and the given key block.

In some examples, the determining the attention values for the given query block further includes, for each of one or more other blocks among the key blocks as the given key block, repeating the performing the element-wise operations and the performing the matrix multiplication operation.

In some examples, the determining the attention values for the given query block further includes, for a final key block, among the key blocks: performing element-wise operations to update the attention values for the given query block based at least in part on attention scores for the given query block and the final key block, the attention scores for the given query block and the final key block having been determined in a previous iteration.

In some examples, the determining the attention values for the given query block further includes: normalizing the attention values for the given query block, including: adjusting dimensionality of cumulative probability values for respective rows of the given query block to match the given query block; and for respective elements of the attention values for the given query block, dividing one of the attention values for the given query block by a corresponding one of the adjusted cumulative probability values.

In an embodiment, one or more computer readable storage media have instructions stored thereon that, when executed by one or more processors, direct the one or more processors to perform operations comprising: receiving a query vector, a key vector, and a value vector; and determining attention values for the query vector, the key vector, and the value vector, including: splitting the query vector into query blocks, the key vector into key blocks, and the value vector into value blocks; and for a given query block, among the query blocks, determining attention values for the given query block, wherein the determining the attention values for the given query block includes: performing element-wise operations to update the attention values for the given query block based at least in part on attention scores for the given query block and a given key block, among the key blocks; and performing a matrix multiplication operation using the given query block and a next key block, among the key blocks, to determine attention scores for the given query block and the next key block, wherein the matrix multiplication operation is performed concurrently with at least some of the element-wise operations to update the attention values for the given query block.

In an embodiment, a computer system comprises a processing system and memory, wherein the computer system is configured to perform operations comprising: receiving a query vector, a key vector, and a value vector; and determining attention values for the query vector, the key vector, and the value vector, including: splitting the query vector into query blocks, the key vector into key blocks, and the value vector into value blocks; and for a given query block, among the query blocks, determining attention values for the given query block, wherein the determining the attention values for the given query block includes: performing element-wise operations to update the attention values for the given query block based at least in part on attention scores for the given query block and a given key block, among the key blocks; and performing a matrix multiplication operation using the given query block and a next key block, among the key blocks, to determine attention scores for the given query block and the next key block, wherein the matrix multiplication operation is performed concurrently with at least some of the element-wise operations to update the attention values for the given query block.

In an embodiment, an accelerated attention mechanism with parallel operations can improve machine learning technology by enabling execution of certain matrix multiplication operations in parallel with element-wise operations, leading to an increase in speed without quality loss is defined. To compute attention values in a machine learning model, the mechanism can receive a query vector, key vector, and value vector and split each of these vectors into blocks. For a given query block, the mechanism can determine attention values by performing element-wise operations to update the attention values for the given query block based at least in part on previously computed attention scores for the given query block and a given key block. Concurrent with performance of at least some of the element-wise operations, the mechanism can perform a matrix multiplication operation using given query block and a next key block to determine attention scores for the given query block and next key block.

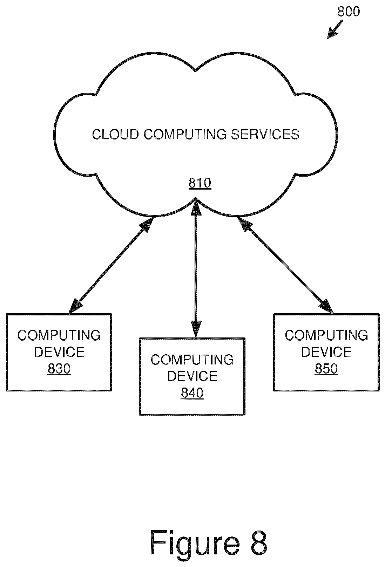

Figure 8 illustrates a generalized example of a suitable cloud-supported environment **800** in which described embodiments, techniques, and technologies may be implemented. In the example environment **800,** various types of services (e.g., computing services) are provided by a cloud **810.** For example, the cloud **810** can comprise a collection of computing devices, which may be located centrally or distributed, that provide cloud-based services to various types of users and devices connected via a network such as the Internet. The implementation environment **800** can be used in different ways to accomplish computing tasks. For example, some tasks (e.g., processing user input and presenting a user interface) can be performed on local computing devices (e.g., connected devices **830, 840, 850**) while other tasks (e.g., storage of data to be used in subsequent processing) can be performed in the cloud **810.**

In example environment **800,** the cloud **810** provides services for connected devices **830, 840, 850** with a variety of screen capabilities. Connected device **830** represents a device with a computer screen (e.g., a mid-size screen). For example, connected device **830** could be a personal computer such as desktop computer, laptop, notebook, netbook, or the like. Connected device **840** represents a device with a mobile device screen (e.g., a small size screen). For example, connected device **840** could be a mobile phone, smart phone, personal digital assistant, tablet computer, and the like. Connected device **850** represents a device with a large screen. For example, connected device **850** could be a television screen (e.g., a smart television) or another device connected to a television (e.g., a set-top box or gaming console) or the like. One or more of the connected devices **830, 840, 850** can include touchscreen capabilities. Touchscreens can accept input in different ways. For example, capacitive touchscreens detect touch input when an object (e.g., a fingertip or stylus) distorts or interrupts an electrical current running across the surface. As another example, touchscreens can use optical sensors to detect touch input when beams from the optical sensors are interrupted. Physical contact with the surface of the screen is not necessary for input to be detected by some touchscreens. Devices without screen capabilities also can be used in example environment **800.** For example, the cloud **810** can provide services for one or more computers (e.g., server computers) without displays.

Services can be provided by the cloud **810** through service providers (not depicted), or through other providers of online services (not depicted). For example, cloud services can be customized to the screen size, display capability, and/or touchscreen capability of a particular connected device (e.g., connected devices **830, 840, 850**).

In example environment **800,** the cloud **810** provides the technologies and solutions described herein to the various connected devices **830, 840, 850** using, at least in part, the service providers. For example, the service providers can provide a centralized solution for various cloud-based services. The service providers can manage service subscriptions for users and/or devices (e.g., for the connected devices **830, 840, 850** and/or their respective users).

## Claims

1. A method (600) for computing attention values in a machine learning model, the method comprising:
receiving (605) a query vector (205; 305), a key vector (210; 310), and a value vector (215; 315); and
determining (610) attention values for the query vector (205; 305), the key vector (210; 310), and the value vector (215; 315), including:
splitting (615) the query vector (205; 305) into query blocks (220; 320), the key vector into key blocks (225, 260; 325), and the value vector into value blocks (230, 265); and
for a given query block (220; 320), among the query blocks, determining (620) attention values for the given query block (220; 320), wherein the determining the attention values for the given query block includes:
performing (625) element-wise operations to update the attention values for the given query block (220; 320) based at least in part on attention scores for the given query block (220; 320) and a given key block (225; 325), among the key blocks; and
performing (630) a matrix multiplication operation using the given query block (220; 320) and a next key block (260), among the key blocks, to determine attention scores for the given query block (220; 320) and the next key block (260), wherein the matrix multiplication operation is performed concurrently with at least some of the element-wise operations to update the attention values for the given query block (220; 320).

2. The method of claim 1, wherein:
the query vector is a multi-dimensional vector, the multi-dimensional vector being a two-dimensional vector having a shape of a first sequence length by a head dimension or a three-dimensional vector having a shape of a count of number of heads by the first sequence length by the head dimension;
the key vector is a multi-dimensional vector, the multi-dimensional vector being a two-dimensional vector having a shape of a second sequence length by the head dimension or a three-dimensional vector having a shape of the count of number of heads by the second sequence length by the head dimension;
the value vector is a multi-dimensional vector, the multi-dimensional vector being a two-dimensional vector having a shape of the second sequence length by the head dimension or a three-dimensional vector having a shape of the count of number of heads by the second sequence length by the head dimension;
each query block, among the query blocks, is a two-dimensional vector having a shape of a row block size by the head dimension;
each key block, among the key blocks, is a two-dimensional vector having a shape of a column block size by the head dimension;
each value block, among the value blocks, is a two-dimensional vector having a shape of the column block size by the head dimension;
the attention scores for the given query block and the given key block are organized, in a first attention scores block, as a two-dimensional vector having a shape of the row block size by the column block size;
the attention scores for the given query block and the next key block are organized, in a second attention scores block, as a two-dimensional vector having a shape of the row block size by the column block size; and
the attention values for the given query block are organized, in an attention values block, as a two-dimensional vector having a shape of the row block size by the head dimension.

3. The method of claim 1 or claim 2, wherein the matrix multiplication operation using the given query block and the next key block uses, as inputs, the given query block and a transpose of the next key block, and wherein the matrix multiplication operation using the given query block and the next key block produces, as output, an attention score block including the attention scores for the given query block and the next key block.

4. The method of any of claims 1-3, wherein the performing the element-wise operations to update the attention values for the given query block includes:
determining scaling values based on differences between previous maximum values and current maximum values for respective rows of the given query block, wherein the scaling values are organized as a one-dimensional vector having a shape of a row block size, the row block size of the one-dimensional vector matching a row block size of the given query block, and wherein the determining the scaling values includes, for each of the respective rows of the given query block:
determining a difference between a previous maximum value for the row and a current maximum value for the row; and
calculating a result of applying the difference as an exponent to a base e; and updating the attention values for the given query block based on the scaling values, including:
adjusting dimensionality of the scaling values to match the given query block, wherein after the adjusting the dimensionality of the scaling values, the scaling values are organized as a two-dimensional vector having a shape of the row block size by a head dimension; and
for respective elements of the attention values for the given query block, multiplying one of the attention values for the given query block by a corresponding one of the adjusted scaling values.

5. The method of any of claims 1-4, wherein the determining the attention values for the given query block further includes checking whether the given key block is a final key block among the key blocks, wherein the performing the matrix multiplication operation to determine the attention scores for the given query block and the next key block is contingent on the given key block not being the final key block.

6. The method of any of claims 1-5, wherein the determining the attention values for the given query block further includes:
performing element-wise operations to set probability values for the given query block and the given key block based at least in part on the attention scores for the given query block and the given key block.

7. The method of claim 6, wherein the operations to set the probability values for the given query block and the given key block implement a softmax function, and wherein the operations to set the probability values for the given query block and the given key block that implements a softmax function include:
for respective rows of the given query block, setting a previous maximum value for the row to a current maximum value of the row;
for the respective rows of the given query block, setting the current maximum value of the row to a greater of the current maximum value of the row and a maximum value of a corresponding row of the attention scores for the given query block and the given key block;
adjusting dimensionality of the current maximum values of the respective rows of the given query block to match the attention scores for the given query block and the given key block; and
for respective elements of the probability values for the given query block and the given key block, setting the probability value using a corresponding one of the attention scores for the given query block and the given key block, wherein for the respective elements of the probability values, the setting the probability value includes:
determining a difference between the corresponding one of the attention scores and a corresponding one of the adjusted current maximum values; and
calculating a result of applying the difference as an exponent to a base e.

8. The method of any of claim 6 or claim 7, wherein the determining the attention values for the given query block further includes:
performing a matrix multiplication operation using the probability values and a given value block, among the value blocks, to determine attention value updates for the given query block and the given key block, wherein the matrix multiplication operation using the probability values and the given value block uses, as inputs, the probability values and the given value block, and wherein the matrix multiplication operation using the probability values and the given value block produces, as output, an attention value update block including the attention value updates for the given query block and the given key block; and
for respective elements the attention values for the given query block, adding one of the attention value updates to a corresponding one of the attention values for the given query block.

9. The method of any of claims 6-8, wherein the determining the attention values for the given query block further includes, for respective rows of the given query block:
determining a cumulative probability value for a corresponding row of the probability values for the given query block and the given key block; and
adding the cumulative probability value for the corresponding row of the probability values to a cumulative probability value for the row of the given query block.

10. The method of any of claims 1-9, wherein the given key block is an initial key block, among the key blocks, and wherein the determining the attention values for the given query block further includes, before the performing element-wise operations to update the attention values for the given query block based at least in part on the attention scores for the given query block and the given key block:
performing a matrix multiply operation using the given query block and the given key block to determine the attention scores for the given query block and the given key block.

11. The method of any of claims 1-10, wherein the determining the attention values for the given query block further includes, for each of one or more other blocks among the key blocks as the given key block, repeating the performing the element-wise operations and the performing the matrix multiplication operation.

12. The method of any of claims 1-11, wherein the determining the attention values for the given query block further includes, for a final key block, among the key blocks:
performing element-wise operations to update the attention values for the given query block based at least in part on attention scores for the given query block and the final key block, the attention scores for the given query block and the final key block having been determined in a previous iteration.

13. The method of any of claims 1-12, wherein the determining the attention values for the given query block further includes:
normalizing the attention values for the given query block, including:
adjusting dimensionality of cumulative probability values for respective rows of the given query block to match the given query block; and
for respective elements of the attention values for the given query block, dividing one of the attention values for the given query block by a corresponding one of the adjusted cumulative probability values.

14. One or more computer readable storage media having instructions stored thereon that, when executed by one or more processors, direct the one or more processors to perform operations (600) comprising:
receiving (605) a query vector (205; 305), a key vector (210; 310), and a value vector (215; 315); and
determining (610) attention values for the query vector (205; 305), the key vector (210; 310), and the value vector (215; 315), including:
splitting (615) the query vector (205; 305) into query blocks (220; 320), the key vector (210; 310) into key blocks (225, 260; 325), and the value vector into value blocks (230, 265); and
for a given query block (220; 320), among the query blocks, determining (620) attention values for the given query block (220; 320), wherein the determining the attention values for the given query block (220; 320) includes:
performing (625) element-wise operations to update the attention values for the given query block (220; 320) based at least in part on attention scores for the given query block (220; 320) and a given key block (225; 325), among the key blocks; and
performing (630) a matrix multiplication operation using the given query block (220; 320) and a next key block (260), among the key blocks, to determine attention scores for the given query block (220; 320) and the next key block (260), wherein the matrix multiplication operation is performed concurrently with at least some of the element-wise operations to update the attention values for the given query block (220; 320).

15. A computer system comprising a processing system and memory, wherein the computer system is configured to perform operations (600) comprising:
receiving (605) a query vector (205; 305), a key vector (210; 310), and a value vector (215; 315); and
determining (610) attention values for the query vector (205; 305), the key vector (210; 310), and the value vector (215; 315), including:
splitting (615) the query vector (205; 305) into query blocks (220; 320), the key vector (210; 310) into key blocks (225, 260; 325), and the value vector (215; 215) into value blocks (230, 265); and
for a given query block (220; 320), among the query blocks, determining (620) attention values for the given query block (220; 320), wherein the determining the attention values for the given query block (220; 320) includes:
performing (625) element-wise operations to update the attention values for the given query block (220; 320) based at least in part on attention scores for the given query block (220; 320) and a given key block (225; 325), among the key blocks; and
performing (630) a matrix multiplication operation using the given query block (220; 320) and a next key block (260), among the key blocks, to determine attention scores for the given query block and the next key block (260), wherein the matrix multiplication operation is performed concurrently with at least some of the element-wise operations to update the attention values for the given query block (220; 320).
